# EUROPEAN PATENT APPLICATION

(11) **EP 4 611 402 A1**
(43) Date of publication of application: **03.09.2025**
(21) Application number: 23884865.9
(22) Date of filing: 30.10.2023
(51) Int. Cl.: H04W 4/02

(54) **PRIVACY CONFIGURATION VERIFICATION METHOD AND RELATED DEVICE**

(30) Priority: 04.11.2022 CN 202211379403
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Isarpatent
(86) International application number: PCT/CN2023/127854
(87) International publication number: WO 2024/093935

(57) **Abstract**

Embodiments of this application disclose a privacy configuration verification method and a related device. The method includes: An AMF receives a first positioning service request sent by a first network element, where the first positioning service request includes identification information of a first UE and first indication information, the first UE is a target UE to be positioned, and the first indication information indicates a positioning-related privacy verification action of the first UE; the AMF sends a second positioning service request to a second UE when the AMF cannot establish a connection to the first UE; the AMF receives a second positioning service response sent by the second UE, where the second positioning service response indicates a privacy configuration verification result of the first UE, and the second UE is a UE used to establish a connection to the first UE; and the AMF sends a first positioning service response to the first network element. According to embodiments of this application, verification on a privacy configuration can be completed when a core network element cannot establish a connection to a target UE.

## Description

This application claims priority to Chinese Patent Application No. 202211379403.2, filed with the China National Intellectual Property Administration on November 4, 2022, and entitled "PRIVACY CONFIGURATION VERIFICATION METHOD AND RELATED DEVICE", which is incorporated herein by reference in its entirety.

### TECHNICAL FIELD

This application relates to the field of communication technologies, and in particular, to a privacy configuration verification method and a related device.

### BACKGROUND

A sidelink positioning/ranging service (Sidelink positioning/Ranging) may also be referred to as a ranging service/sidelink positioning (Ranging/Sidelink positioning), and may be used to calculate an angle and/or a distance between two user equipments (user equipment, UE). When a target UE is disconnected from a network or is connected to the network but sufficient positioning measurement with a base station cannot be performed, the target UE may obtain, through sidelink positioning, a relative location between the target UE and a positioned UE that is connected to the network. In this way, an absolute location of the target UE may be obtained through calculation by using an absolute location of the positioned UE.

In a positioning process, a core network element needs to establish a connection to the target UE to complete verification on a privacy configuration (where for example, the privacy configuration is that positioning is allowed and needs to be notified to a user, or that positioning needs to be notified to the user and confirmed by the user). However, when the core network element cannot establish a connection to the target UE, the verification on the privacy configuration cannot be completed.

### SUMMARY

A technical problem to be resolved in embodiments of this application is to provide a privacy configuration verification method and a related device, to complete verification on a privacy configuration when a core network element cannot establish a connection to a target UE.

According to a first aspect, an embodiment of this application provides a privacy configuration verification method. The method may include:

An access and mobility management AMF network element receives a first positioning service request sent by a first network element, where the first positioning service request includes identification information of a first user equipment UE and first indication information, the first UE is a target UE to be positioned, and the first indication information indicates a positioning-related privacy verification action of the first UE;
the AMF sends a second positioning service request to a second UE when the AMF cannot establish a connection to the first UE;
the AMF receives a second positioning service response sent by the second UE, where the second positioning service response indicates a privacy configuration verification result of the first UE, and the second UE is a UE used to establish a connection to the first UE; and
the AMF sends a first positioning service response to the first network element.

In this way, the AMF implements indirect communication via the second UE, namely, a UE that establishes a connection to the first UE, and may notify the first UE of information related to a positioning service. In addition, when the first UE needs to perform verification on a positioning-related privacy configuration, the AMF receives the privacy configuration verification result, namely, a positioning privacy indication, of the first UE via the second UE. In this way, when the AMF cannot establish a connection to the first UE, privacy configuration verification with the first UE is completed, a function of a related device is extended, and system compatibility and universality are improved.

In a possible implementation, the first positioning service request is used to request an absolute location of the first UE or a relative location between the first UE and the second UE.

Therefore, the manner in this embodiment of this application is not only applicable to a scenario in which the absolute location of the first UE is obtained by using a positioning service based on network-assisted sidelink positioning, but also applicable to a scenario in which the relative location between the first UE and the second UE is obtained through a sidelink positioning/ranging service.

In a possible implementation, the second positioning service request is sent by the AMF to a location management function LMF network element, and processed by the LMF and sent to the second UE.

Optionally, the AMF may directly communicate with the second UE, for example, send the second positioning service request carrying the identification information of the first UE to the second UE, and receive the second positioning service response sent by the second UE. Alternatively, the AMF may communicate with the second UE via the LMF. For example, the second positioning service request may be sent by the AMF to the LMF. After processing the second positioning service request, the LMF selects the second UE, and sends the second positioning service request to the second UE. After receiving a privacy verification response sent by the first UE, the second UE may send the second positioning service response to the LMF. The LMF then sends the first positioning service response to the first network element based on the second positioning service response.

In a possible implementation, when the first indication information indicates that the first UE needs to be notified, the second positioning service request includes a notification indication and/or identification information of a positioning client.

In a possible implementation, when the first indication information indicates that the first UE needs to be notified and user confirmation needs to be obtained, the second positioning service request further includes indication information indicating that the user confirmation is required.

In a possible implementation, a trigger condition under which the second positioning service request includes the notification indication and/or the identification information of the positioning client, and/or the indication information indicating that the user confirmation is required includes at least one of the following:

The first indication information indicates that a privacy configuration of the first UE needs to be notified to a user and/or confirmed by the user;
the AMF determines that a connection to the first UE cannot be established; or
the AMF determines that a notification response and/or a confirmation response related to the first UE are/is not received, where the notification response and/or the confirmation response are/is responses/a response generated after verification is performed on the privacy configuration of the first UE.

In a possible implementation, when the second positioning service request includes a notification indication and/or identification information of a positioning client, the second positioning service response includes a notification response message corresponding to the notification indication; or
when the second positioning service request includes the notification indication and/or the identification information of the positioning client, and indication information indicating that user confirmation is required, the second positioning service response further includes:
a positioning privacy indication corresponding to the indication information, where the positioning privacy indication indicates whether the first UE allows positioning.

In a possible implementation, in either of the following cases:
the AMF cannot establish a connection to the first UE, and the first indication information indicates that a privacy configuration is that positioning needs to be notified to a user and confirmed by the user, and positioning is allowed when there is no response, or
the AMF cannot establish a connection to the first UE, and the first indication information indicates that the privacy configuration is that positioning needs to be notified to a user and confirmed by the user, and positioning is not allowed when there is no response,
the method further includes:

The AMF sends a positioning service reject message to the first network element, where the positioning service reject message is used to reject the first positioning service request of the first network element.

In a possible implementation, the positioning service reject message includes a reject cause value, and the reject cause value indicates that the AMF cannot establish a connection to the first UE or cannot obtain user confirmation.

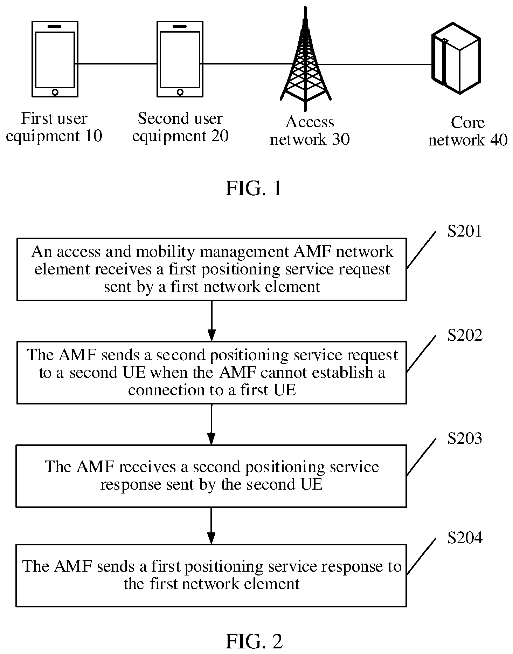

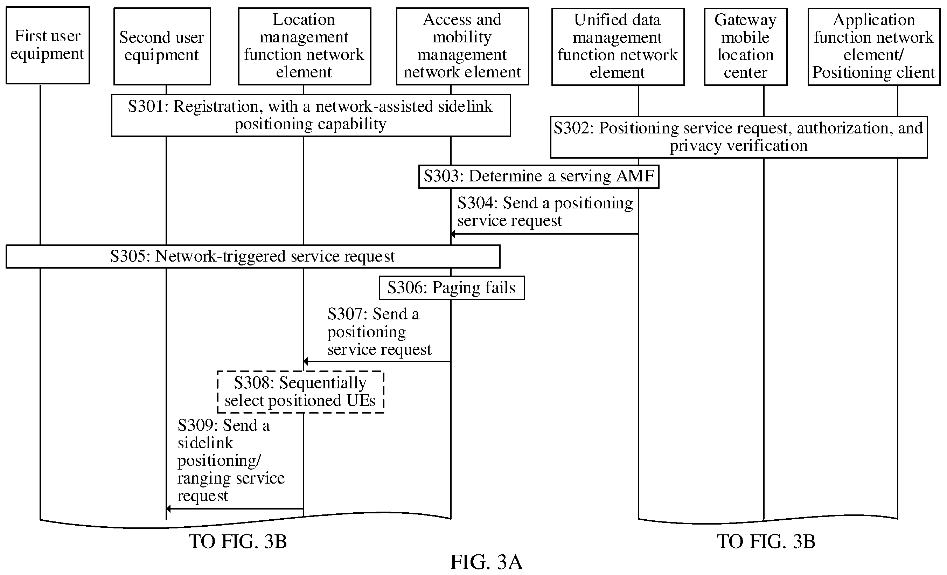

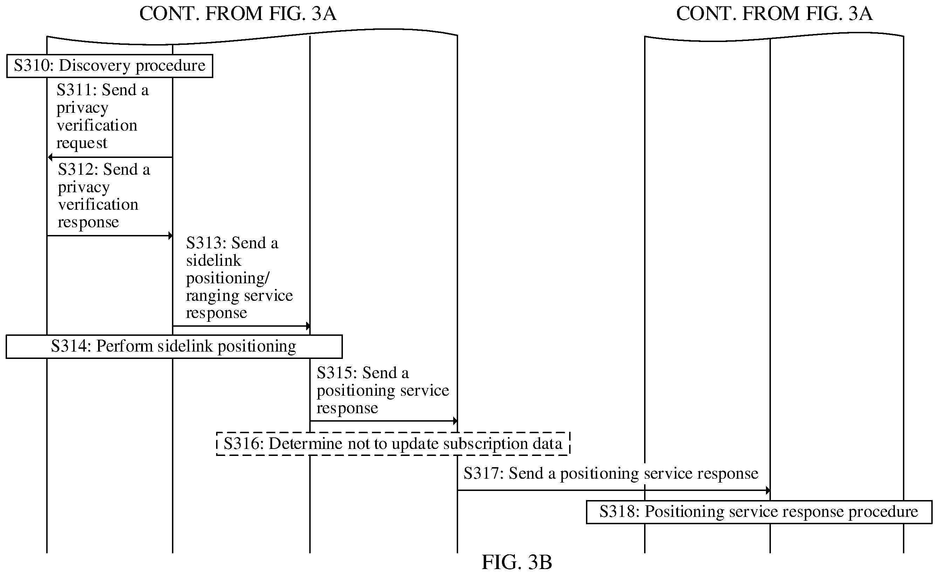

In this way, when the AMF cannot establish a connection to the first UE (for example, paging fails), if the AMF determines that user confirmation cannot be performed, and the first indication information indicates that the user confirmation is required, the AMF may reject the positioning service request. It should be noted that, this manner of rejecting the positioning service request may coexist with an embodiment shown in FIG. 2, or FIG. 3A and FIG. 3B, or may exist independently. In other words, a procedure of rejecting the positioning service request is directly started provided that the foregoing situation occurs. In this way, changes to the system can be reduced, and efficiency of processing the positioning service by the system can be improved.

According to a second aspect, an embodiment of this application provides a privacy configuration verification method. The method may include:

A second user equipment UE receives a sidelink positioning/ranging service request sent by an access and mobility management AMF network element, where the sidelink positioning/ranging service request includes identification information of a first UE, the second UE is a UE connected to the AMF, and the first UE is a target UE.
the second UE sends a discovery message to the first UE, and establishes a connection to the first UE;
the second UE sends a privacy verification request to the first UE, where the privacy verification request is used to notify the first UE to perform verification on a privacy configuration;
the second UE receives a privacy verification response sent by the first UE, where the privacy verification response indicates a privacy configuration verification result of the first UE; and
the second UE sends a sidelink positioning/ranging service response to the AMF based on the privacy verification response.

The second UE establishes a connection to the first UE, so that the AMF that cannot be connected to the first UE can complete verification on the privacy configuration of the first UE via the second UE.

In a possible implementation, when the privacy configuration is that the first UE needs to be notified, the sidelink positioning/ranging service request includes a notification indication and/or identification information of a positioning client.

In a possible implementation, when the privacy configuration is that the first UE needs to be notified and user confirmation is required, the sidelink positioning/ranging service request further includes indication information indicating that the user confirmation is required.

In a possible implementation, a trigger condition under which the sidelink positioning/ranging service request includes the notification indication and/or the identification information of the positioning client, and/or the indication information indicating that the user confirmation is required includes:
the AMF determines that a notification response and/or a confirmation response related to the first UE are/is not received, where the notification response and/or the confirmation response are/is responses/a response generated after verification is performed on the privacy configuration of the first UE.

In a possible implementation, when the sidelink positioning/ranging service request includes a notification indication and/or identification information of a positioning client, the sidelink positioning/ranging service response includes a notification response message corresponding to the notification indication; or
when the sidelink positioning/ranging service request includes the notification indication and/or the identification information of the positioning client, and indication information indicating that user confirmation is required, the sidelink positioning/ranging service response further includes:
a positioning privacy indication corresponding to the indication information, where the positioning privacy indication indicates whether the first UE allows positioning.

In a possible implementation, when the sidelink positioning/ranging service request includes the notification indication and/or the identification information of the positioning client, the privacy verification request includes the notification indication and/or the identification information of the positioning client, and the privacy verification response includes the notification response message corresponding to the notification indication; or
when the sidelink positioning/ranging service request includes the notification indication and/or the identification information of the positioning client, and the indication information indicating that the user confirmation is required, the privacy verification request includes the notification indication and/or the identification information of the positioning client, and the indication information indicating that the user confirmation is required, and the privacy verification response includes the notification response message and the positioning privacy indication corresponding to the indication information.

In a possible implementation, the method further includes:

The second UE sends a verification result notification message to the AMF, where the verification result notification message includes the positioning privacy indication.

In a possible implementation, the verification result notification message further includes:
a notification complete indication indicating that the first UE has completed verification notification for the second UE.

A device on a network side can learn of a privacy configuration verification status of the first UE by using the notification complete indication.

According to a third aspect, an embodiment of this application provides a privacy configuration verification method. The method may include:

A core network element sends a request message to a unified data management UDM network element, where the request message includes identification information of a UE and positioning privacy subscription data that is requested to be obtained, and the positioning privacy subscription data indicates whether positioning is allowed when the UE is disconnected from a network or needs to be positioned via a relay UE; and
the core network element receives a response message sent by the UDM, where the response message includes the positioning privacy subscription data of the UE.

The positioning privacy subscription data is stored in UE subscription data stored in the UDM, to explicitly indicate whether positioning is allowed when the UE is disconnected from the network or needs to be positioned via the relay UE. In this way, the core network element, for example, an AMF or a GMLC, can learn of a status of the UE in advance, to complete verification on a privacy configuration in advance. The AMF or the GMLC may determine, based on the positioning privacy subscription data, whether to perform a subsequent positioning operation, to extend a function of the AMF or the GMLC, improve positioning efficiency, and ensure privacy security of the first UE.

In a possible implementation, the method further includes:
The core network element determines, based on the privacy subscription data, whether to position the UE.

In a possible implementation, before the core network element sends the request message to the unified data management UDM network element, the method further includes:
The core network element determines that an access and mobility management AMF network element cannot establish a connection to the UE.

In a possible implementation, the request message is further used to request to obtain a positioning-related privacy configuration of the UE, and the response message further includes the positioning-related privacy configuration of the UE.

In this case, the privacy configuration is independent of the positioning privacy subscription data. The core network element may request to obtain the positioning privacy subscription data when determining that the connection to the first UE cannot be established, or may obtain both the privacy configuration and the positioning privacy subscription data when obtaining the subscription data.

In a possible implementation, the core network element is an AMF or a gateway mobile location center GLMC.

According to a fourth aspect, an embodiment of this application provides a privacy configuration verification method. The method may include:
A unified data management UDM network element receives a request message sent by a core network element, where the request message includes identification information of a UE and positioning privacy subscription data that is requested to be obtained, and the positioning privacy subscription data is stored in the UDM and indicates whether positioning is allowed when the UE is disconnected from a network or needs to be positioned via a relay UE; and
the UDM sends a response message to the core network element, where the response message includes the positioning privacy subscription data of the UE.

In a possible implementation, the request message is further used to request to obtain a positioning-related privacy configuration of the UE, and the response message further includes the positioning-related privacy configuration of the UE.

In a possible implementation, the core network element is an AMF or a gateway mobile location center GLMC.

According to a fifth aspect, an embodiment of this application provides an access and mobility management network element. The access and mobility management network element may include:
a receiving unit, configured to receive a first positioning service request sent by a first network element, where the first positioning service request includes identification information of a first user equipment UE and first indication information, the first UE is a target UE to be positioned, and the first indication information indicates a positioning-related privacy verification action of the first UE; and
a sending unit, configured to send a second positioning service request to a second UE when the access and mobility management AMF network element cannot establish a connection to the first UE, where
the receiving unit is further configured to receive a second positioning service response sent by the second UE, where the second positioning service response indicates a privacy configuration verification result of the first UE, and the second UE is a UE that establishes a connection to the first UE; and
the sending unit is further configured to send a first positioning service response to the first network element.

In a possible implementation, the first positioning service request is used to request an absolute location of the first UE or a relative location between the first UE and the second UE.

In a possible implementation, the second positioning service request is sent by the AMF to a location management function LMF network element, and processed by the LMF and sent to the second UE.

In a possible implementation, when the first indication information indicates that the first UE needs to be notified, the second positioning service request includes a notification indication and/or identification information of a positioning client.

In a possible implementation, when the first indication information indicates that the first UE needs to be notified and user confirmation needs to be obtained, the second positioning service request further includes indication information indicating that the user confirmation is required.

In a possible implementation, a trigger condition under which the second positioning service request includes the notification indication and/or the identification information of the positioning client, and/or the indication information indicating that the user confirmation is required includes at least one of the following:
The first indication information indicates that a privacy configuration of the first UE needs to be notified to a user and/or confirmed by the user;
the AMF determines that a connection to the first UE cannot be established; or
the AMF determines that a notification response and/or a confirmation response related to the first UE are/is not received, where the notification response and/or the confirmation response are/is responses/a response generated after verification is performed on the privacy configuration of the first UE.

In a possible implementation, when the second positioning service request includes a notification indication and/or identification information of a positioning client, the second positioning service response includes a notification response message corresponding to the notification indication; or
when the second positioning service request includes the notification indication and/or the identification information of the positioning client, and indication information indicating that user confirmation is required, the second positioning service response further includes:
a positioning privacy indication corresponding to the indication information, where the positioning privacy indication indicates whether the first UE allows positioning.

In a possible implementation, in either of the following cases:
the AMF cannot establish a connection to the first UE, and the first indication information indicates that a privacy configuration is that positioning needs to be notified to a user and confirmed by the user, and positioning is allowed when there is no response, or
the AMF cannot establish a connection to the first UE, and the first indication information indicates that the privacy configuration is that positioning needs to be notified to a user and confirmed by the user, and positioning is not allowed when there is no response,
the sending unit is further configured to:
   send a positioning service reject message to the first network element, where the positioning service reject message is used to reject the first positioning service request of the first network element.

In a possible implementation, the positioning service reject message includes a reject cause value, and the reject cause value indicates that the AMF cannot establish a connection to the first UE or cannot obtain user confirmation.

According to a sixth aspect, an embodiment of this application provides a user equipment. The user equipment may include:
a receiving unit, configured to receive a sidelink positioning/ranging service request sent by an access and mobility management AMF network element, where the sidelink positioning/ranging service request includes identification information of a first UE, a user equipment is a UE connected to the AMF, and the first UE is a target UE; and
a sending unit, configured to send a discovery message to the first UE, and establish a connection to the first UE; and
send a privacy verification request to the first UE, where the privacy verification request is used to notify the first UE to perform verification on a privacy configuration, where
the receiving unit is further configured to receive a privacy verification response sent by the first UE, where the privacy verification response indicates a privacy configuration verification result of the first UE; and the sending unit is further configured to send a sidelink positioning/ranging service response to the AMF based on the privacy verification response.

In a possible implementation, when the privacy configuration is that the first UE needs to be notified, the sidelink positioning/ranging service request includes a notification indication and/or identification information of a positioning client.

In a possible implementation, when the privacy configuration is that the first UE needs to be notified and user confirmation is required, the sidelink positioning/ranging service request further includes indication information indicating that the user confirmation is required.

In a possible implementation, a trigger condition under which the sidelink positioning/ranging service request includes the notification indication and/or the identification information of the positioning client, and/or the indication information indicating that the user confirmation is required includes:
the AMF determines that a notification response and/or a confirmation response related to the first UE are/is not received, where the notification response and/or the confirmation response are/is responses/a response generated after verification is performed on the privacy configuration of the first UE.

In a possible implementation, when the sidelink positioning/ranging service request includes a notification indication and/or identification information of a positioning client, the sidelink positioning/ranging service response includes a notification response message corresponding to the notification indication; or
when the sidelink positioning/ranging service request includes the notification indication and/or the identification information of the positioning client, and indication information indicating that user confirmation is required, the sidelink positioning/ranging service response further includes:
a positioning privacy indication corresponding to the indication information, where the positioning privacy indication indicates whether the first UE allows positioning.

In a possible implementation, when the sidelink positioning/ranging service request includes the notification indication and/or the identification information of the positioning client, the privacy verification request includes the notification indication and/or the identification information of the positioning client, and the privacy verification response includes the notification response message corresponding to the notification indication; or
when the sidelink positioning/ranging service request includes the notification indication and/or the identification information of the positioning client, and the indication information indicating that the user confirmation is required, the privacy verification request includes the notification indication and/or the identification information of the positioning client, and the indication information indicating that the user confirmation is required, and the privacy verification response includes the notification response message and the positioning privacy indication corresponding to the indication information.

In a possible implementation, the sending unit is further configured to:
send a verification result notification message to the AMF, where the verification result notification message includes the positioning privacy indication.

In a possible implementation, the verification result notification message further includes:
a notification complete indication indicating that the first UE has completed verification notification for the user equipment.

According to a seventh aspect, an embodiment of this application provides a core network element. The core network element may include:
a sending unit, configured to send a request message to a unified data management UDM network element, where the request message includes identification information of a UE and positioning privacy subscription data that is requested to be obtained, and the positioning privacy subscription data indicates whether positioning is allowed when the UE is disconnected from a network or needs to be positioned via a relay UE; and
a receiving unit, configured to receive a response message sent by the UDM, where the response message includes the positioning privacy subscription data of the UE.

In a possible implementation, the core network element further includes:
a processing unit, configured to determine, based on the privacy subscription data, whether to position the UE.

In a possible implementation, before the sending unit sends the request message to the unified data management UDM network element, the processing unit is further configured to:
determine that an access and mobility management AMF network element cannot establish a connection to the UE.

In a possible implementation, the request message is further used to request to obtain a positioning-related privacy configuration of the UE, and the response message further includes the positioning-related privacy configuration of the UE.

In a possible implementation, the core network element is an AMF or a gateway mobile location center GLMC.

According to an eighth aspect, an embodiment of this application provides a unified data management network element. The unified data management network element may include:
a receiving unit, configured to receive a request message sent by a core network element, where the request message includes identification information of a UE and positioning privacy subscription data that is requested to be obtained, and the positioning privacy subscription data is stored on the unified data management UDM network element and indicates whether positioning is allowed when the UE is disconnected from a network or needs to be positioned via a relay UE; and
a sending unit, configured to send a response message to the core network element, where the response message includes the positioning privacy subscription data of the UE.

In a possible implementation, the request message is further used to request to obtain a positioning-related privacy configuration of the UE, and the response message further includes the positioning-related privacy configuration of the UE.

In a possible implementation, the core network element is an AMF or a gateway mobile location center GLMC.

According to a ninth aspect, an apparatus is provided. The apparatus provided in this application has a function of implementing behavior of the access and mobility management network element, the user equipment, the access network element, or the unified data management network element in the foregoing method aspects, and includes a corresponding component (means) configured to perform steps or functions described in the foregoing method aspects. The steps or the functions may be implemented by using software, hardware (for example, a circuit), or a combination of hardware and software.

In a possible design, the apparatus includes one or more processors and a communication unit. The one or more processors are configured to support the apparatus in performing a corresponding function of the access and mobility management network element in the foregoing methods, for example, determining that the AMF cannot establish a connection to the first UE. The communication unit is configured to support the apparatus in communicating with another device, to implement a receiving and/or sending function, for example, receiving the first positioning service request sent by the first network element, sending the second positioning service request to the second UE, receiving the second positioning service response sent by the second UE, and sending the first positioning service response to the first network element.

Optionally, the apparatus may further include one or more memories. The memory is configured to be coupled to the processor, and store program instructions and/or data necessary for the apparatus. The one or more memories may be integrated with the processor, or may be disposed independent of the processor. This is not limited in this application.

The communication unit may be a transceiver or a transceiver circuit. Optionally, the transceiver may alternatively be an input/output circuit or an interface.

The apparatus may alternatively be a communication chip. The communication unit may be an input/output circuit or an interface of the communication chip.

In another possible design, the apparatus includes a transceiver, a processor, and a memory. The processor is configured to control the transceiver or an input/output circuit to receive or send a signal. The memory is configured to store a computer program. The processor is configured to run the computer program in the memory, to enable the apparatus to perform the method completed by the access and mobility management network element in any one of the first aspect or the possible implementations of the first aspect.

In a possible design, the apparatus includes one or more processors and a communication unit. The one or more processors are configured to support the apparatus in performing a corresponding function of the second UE in the foregoing methods, for example, establishing a connection to the first UE, and performing a sidelink positioning/ranging service on the first UE. The communication unit is configured to support the apparatus in communicating with another device, to implement a receiving and/or sending function, for example, receiving the sidelink positioning/ranging service request sent by the access and mobility management AMF network element, sending the discovery message to the first UE, sending the privacy verification request to the first UE, receiving the privacy verification response sent by the first UE, and sending the sidelink positioning/ranging service response to the AMF based on the privacy verification response.

Optionally, the apparatus may further include one or more memories. The memory is configured to be coupled to the processor, and store program instructions and/or data necessary for a network device. The one or more memories may be integrated with the processor, or may be disposed independent of the processor. This is not limited in this application.

The apparatus may be a user equipment having a signal forwarding function, and the communication unit may be a transceiver or a transceiver circuit. Optionally, the transceiver may alternatively be an input/output circuit or an interface.

The apparatus may alternatively be a communication chip. The communication unit may be an input/output circuit or an interface of the communication chip.

In another possible design, the apparatus includes a transceiver, a processor, and a memory. The processor is configured to control the transceiver or the input/output circuit to receive or send a signal. The memory is configured to store a computer program. The processor is configured to run the computer program in the memory, to enable the apparatus to perform the method completed by the second UE in any one of the second aspect or the possible implementations of the second aspect.

In a possible design, the apparatus includes one or more processors and a communication unit. The one or more processors are configured to support the apparatus in performing a function corresponding to the core network element in the foregoing methods, for example, determining that the first UE is not within coverage or a connection to the first UE cannot be established. The communication unit is configured to support the apparatus in communicating with another device, to implement a receiving and/or sending function, for example, sending the request message to the unified data management UDM network element, and receiving the response message sent by the UDM.

Optionally, the apparatus may further include one or more memories. The memory is configured to be coupled to the processor, and store program instructions and/or data necessary for the apparatus. The one or more memories may be integrated with the processor, or may be disposed independent of the processor. This is not limited in this application.

The apparatus may be a GMLC, an AMF, or the like, and the communication unit may be a transceiver or a transceiver circuit. Optionally, the transceiver may alternatively be an input/output circuit or an interface.

The apparatus may alternatively be a communication chip. The communication unit may be an input/output circuit or an interface of the communication chip.

In another possible design, the apparatus includes a transceiver, a processor, and a memory. The processor is configured to control the transceiver or the input/output circuit to receive or send a signal. The memory is configured to store a computer program. The processor is configured to run the computer program in the memory, to enable the apparatus to perform the method completed by the core network element in any one of the third aspect or the possible implementations of the third aspect.

In a possible design, the apparatus includes one or more processors and a communication unit. The one or more processors are configured to support the apparatus in performing a function corresponding to the unified data management network element in the foregoing methods, for example, completing authentication and privacy verification with a GMLC, an AF, or the like. The communication unit is configured to support the apparatus in communicating with another device, to implement a receiving and/or sending function, for example, receiving the request message sent by the core network element, and sending the response message to the core network element.

Optionally, the apparatus may further include one or more memories. The memory is configured to be coupled to the processor, and store program instructions and/or data necessary for the apparatus. The one or more memories may be integrated with the processor, or may be disposed independent of the processor. This is not limited in this application.

The communication unit may be a transceiver or a transceiver circuit. Optionally, the transceiver may alternatively be an input/output circuit or an interface.

The apparatus may alternatively be a communication chip. The communication unit may be an input/output circuit or an interface of the communication chip.

In another possible design, the apparatus includes a transceiver, a processor, and a memory. The processor is configured to control the transceiver or the input/output circuit to receive or send a signal. The memory is configured to store a computer program. The processor is configured to run the computer program in the memory, to enable the apparatus to perform the method completed by the unified data management network element in any one of the fourth aspect or the possible implementations of the fourth aspect.

According to a tenth aspect, a system is provided. The system includes the foregoing AMF, second UE, GMLC, UDM, and first UE to be positioned.

According to an eleventh aspect, a computer-readable storage medium is provided and is configured to store a computer program. The computer program includes instructions used to perform the method according to any one of the first aspect or the possible implementations of the first aspect.

According to a twelfth aspect, a computer-readable storage medium is provided and is configured to store a computer program. The computer program includes instructions used to perform the method according to any one of the second aspect or the possible implementations of the second aspect.

According to a thirteenth aspect, a computer-readable storage medium is provided and is configured to store a computer program. The computer program includes instructions used to perform the method according to any one of the third aspect or the possible implementations of the third aspect.

According to a fourteenth aspect, a computer-readable storage medium is provided and is configured to store a computer program. The computer program includes instructions used to perform the method according to any one of the fourth aspect or the possible implementations of the fourth aspect.

According to a fifteenth aspect, a computer program product is provided. The computer program product includes computer program code. When the computer program code is run on a computer, the computer is enabled to perform the method according to any one of the first aspect or the possible implementations of the first aspect.

According to a sixteenth aspect, a computer program product is provided. The computer program product includes computer program code. When the computer program code is run on a computer, the computer is enabled to perform the method according to any one of the second aspect or the possible implementations of the second aspect.

According to a seventeenth aspect, a computer program product is provided. The computer program product includes computer program code. When the computer program code is run on a computer, the computer is enabled to perform the method according to any one of the third aspect or the possible implementations of the third aspect.

According to an eighteenth aspect, a computer program product is provided. The computer program product includes computer program code. When the computer program code is run on a computer, the computer is enabled to perform the method according to any one of the fourth aspect or the possible implementations of the fourth aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of an architecture of a communication system according to an embodiment of this application;
FIG. 2 is a schematic flowchart of a privacy configuration verification method according to an embodiment of this application;
FIG. 3A and FIG. 3B are a schematic flowchart of another privacy configuration verification method according to an embodiment of this application;
FIG. 4 is a schematic flowchart of still another privacy configuration verification method according to an embodiment of this application;
FIG. 5 is a schematic flowchart of still another privacy configuration verification method according to an embodiment of this application;
FIG. 6 is a schematic flowchart of still another privacy configuration verification method according to an embodiment of this application;
FIG. 7 is a schematic flowchart of still another privacy configuration verification method according to an embodiment of this application;
FIG. 8A and FIG. 8B are a schematic flowchart of obtaining a relative location between a first UE and a second UE based on a sidelink positioning/ranging service;
FIG. 9 is a diagram of composition of an access and mobility management network element according to an embodiment of this application;
FIG. 10 is a diagram of composition of another access and mobility management network element according to an embodiment of this application;
FIG. 11 is a diagram of composition of a user equipment according to an embodiment of this application;
FIG. 12 is a diagram of composition of another user equipment according to an embodiment of this application;
FIG. 13 is a diagram of composition of a core network element according to an embodiment of this application;
FIG. 14 is a diagram of composition of another core network element according to an embodiment of this application;
FIG. 15 is a diagram of composition of a unified data management network element according to an embodiment of this application; and
FIG. 16 is a diagram of composition of another unified data management network element according to an embodiment of this application.

### DESCRIPTION OF EMBODIMENTS

The following describes embodiments of this application with reference to the accompanying drawings in embodiments of this application.

The terms "including", "having", or any other variant thereof mentioned in the specification, the claims, and the accompanying drawings of this application, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

For ease of description, embodiments of the present invention are described by using a 5G system. A person skilled in the art should understand that implementations in embodiments of the present invention are also applicable to an existing communication system and a future communication system of a higher level, for example, 6G or 7G. This is not limited in embodiments of the present invention.

The following describes in detail a privacy configuration verification method and a related device in embodiments of this application with reference to the accompanying drawings.

FIG. 1 is a diagram of an architecture of a communication system according to an embodiment of this application. The communication system may include a first user equipment 10, a second user equipment 20, an access network 30, and a core network 40.

The first user equipment 10, namely, the first UE 10, and the second user equipment 20, namely, the second UE 20, may also be referred to as terminals, terminal devices, wireless terminals, or the like, which may include a cellular phone, a smartphone, a session initiation protocol (Session Initiation Protocol, SIP) phone, a laptop computer, a personal digital assistant (Personal Digital Assistant, PDA), a satellite radio, a global positioning system, a multimedia device, a video device, a digital audio player (for example, an MP3 player), a camera, a game console, or any other device having similar functions. The terminal may also be referred by a person skilled in the art to as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld device, a user agent, a mobile client, a client, or some other appropriate terms. The terminal is an entity, on a user side, for receiving or transmitting a signal. In this embodiment of this application, the first UE 10 cannot access a network, and cannot establish a connection to an AMF in the core network 40. The second UE 20 can access the network, and can be connected to the AMF. In addition, the second UE 20 may establish a connection to the first UE 10.

For ease of description, only one second UE 20 is shown in this embodiment of this application. In an actual scenario, there may be one or more second UEs 20. This is not limited in embodiments of this application.

The access network 30 is configured to connect a UE to the network. The access network 30 includes a series of transport entities (such as line devices and transmission facilities) between a service node interface and a user-network interface, and is an implementation system that provides a required transport bearer capability for a telecommunication service. The access network may be considered as a transport network that is irrelevant to services and applications, and mainly implements functions of cross-connection, multiplexing, and transmission. The access network mainly includes network devices such as base stations. In different communication versions, the base station may be referred to as a base station (gNB), an evolved NodeB (evolved NodeB, eNB), a NodeB (NodeB, NB), a base station controller (Base Station Controller, BSC), a base transceiver station (Base Transceiver Station, BTS), a home base station (for example, a home evolved NodeB, or a home NodeB, HNB), a baseband unit (BaseBand Unit, BBU), or the like. The base station may also be referred by a person skilled in the art to as a base station transceiver, a radio base station, a radio transceiver, a transceiver function, a base station subsystem (Base Station Subsystem, BSS), or some other appropriate terms. The base station is an entity, on a network side, for transmitting or receiving a signal.

The core network 40 is a network configured to connect a service provider to the access network 30, or connect the access network 30 to another access network. Generally, the core network 40 refers to a network part other than the access network 30 and a customer premises network.

A 5G system is used as an example. The core network 40 mainly includes the following network elements.

An access and mobility management function (access and mobility management function, AMF) is configured to establish a NAS connection to a UE, and has a same 5G NAS security context as the UE. The 5G NAS security context includes KAMF, a NAS hierarchy key, key identification information same as that of the NAS hierarchy key, a UE security capability, and uplink and downlink NAS COUNT values. The NAS hierarchy key includes a NAS encryption key and a NAS integrity protection key, which are respectively used for confidentiality protection and integrity protection of a NAS message. A session management function (session management function, SMF) network element is mainly responsible for session management in a mobile network, for example, session establishment, modification, and release. Specific functions are, for example, allocating an IP address to a user and selecting a UPF that provides a packet forwarding function.

A network exposure function (network exposure function, NEF) network element is mainly configured to support exposure of capabilities and events.

A policy control function (policy control function, PCF) network element mainly supports providing a unified policy framework to control network behavior, and providing a policy rule for a control layer network function, and is also responsible for obtaining policy-decision-related subscription information of a user.

A unified data management function (Unified Data Management, UDM) network element is responsible for management of a user identifier, subscription data, and authentication data, registration management of a serving network element of a user, and the like.

A gateway mobile location center (Gateway Mobile Location Center) network element is a 1^{st} network element for an external location application to access the core network, and performs registration and authentication tasks and requests routing information from the UDM. The gateway mobile location center may be an independent network element or included in the NEF network element.

A location management function (location management function, LMF) network element is configured to implement a function, for example, positioning management, including managing a process of reporting UE positioning information, obtaining UE positioning information, and the like.

An application function (Application Function, AF) network element interacts with the core network 40 to provide an application layer service.

A positioning client (LCS Client) is a communication device that requests the core network to provide a positioning service for a target UE, may be a terminal device, or may be a server, a network element in a wireless communication network, or another carrier in this application.

In this embodiment of this application, the first UE 10 is a target UE to be positioned, and has not established a connection to the AMF network element in the core network 40. The second UE 20 is a positioned UE, and may establish a connection to the first UE 10. The second UE 20 is connected to the AMF network element in the core network 40. The following explains terms in embodiments of this application for ease of understanding.

A target UE: is an object of a positioning service requested by a positioning client, a core network element, or a server in this application. A core network in which the target UE is located may provide location information of the target UE based on a positioning request of the positioning client, the core network element, or the server, or notify the positioning client, the core network element, or the server that the target UE has met a positioning event indicated by the positioning request.

Location information of the target UE: Based on the positioning service, the core network element of the target UE may obtain the location information of the target UE. Specifically, for example, the core network element may send the location information of the target UE to the core network element from a positioning computing network element, for example, an evolved serving mobile location center (evolved serving mobile location center, E-SMLC) or an LMF, and the core network element may feed back the location information of the target UE to the positioning client based on the positioning request. Specifically, the core network element may generate a report of the foregoing positioning event based on the location information. The location information of the target UE may be absolute location information of the target UE, or may be relative location information of the target UE relative to a positioned UE.

Positioning refers to determining a location of a device, and is related to a location service in a communication system. The location service means that a mobile communication system obtains geographical location information (for example, longitudinal and latitudinal coordinates) of a user equipment by using a specific positioning technology, provides the geographical location information to a mobile user, a communication system, or a third-party positioning client, and provides a call or non-call service related to a location of the mobile user for the mobile user with the support of specific electronic map information. In this application, positioning types include absolute positioning of a user equipment, and relative positioning of the user equipment implemented based on a sidelink positioning/ranging service.

A positioning request is information used to request a positioning service for a specific terminal (a target UE in this application) in this application. The positioning service may be a location immediate request (location immediate request, LIR) service or a location deferred request (location deferred request, LDR) service. A mobile communication network may notify a positioning service requester (which may be referred to as a positioning client, an external client, or a core network element in this application) of the location information of the target UE or a location-related positioning event by using the positioning service. The core network element in which the target UE is located, for example, an AMF or a mobility management entity (mobility management entity, MME), may be configured to manage a positioning request for the target UE. Specifically, managing the positioning request means that the core network element may be configured to feed back, based on the positioning request, the location information of the target UE to the positioning client, or indicate, to the client, that a positioning event indicated by the positioning request occurs on the target UE.

A privacy configuration indicates positioning-related configuration information of a user equipment. In an existing standard protocol, the privacy configuration may be any one of the following: (1) positioning/sidelink positioning is not allowed; (2) positioning/sidelink positioning is allowed and does not need to be notified to a user; (3) positioning/sidelink positioning is allowed and needs to be notified to the user; (4) positioning needs to be notified to the user and confirmed by the user, and positioning/sidelink positioning is allowed with user authorization or when there is no response; or (5) positioning needs to be notified to the user and confirmed by the user, and positioning/sidelink positioning is allowed with user authorization.

In correspondence to a positioning type, the privacy configuration may be a privacy configuration for absolute positioning, or may be a privacy configuration for a sidelink positioning/ranging service. For example, the privacy configuration for sidelink positioning may be any one of the following: (1) sidelink positioning is not allowed; (2) sidelink positioning is allowed and does not need to be notified to a user; (3) sidelink positioning is allowed and needs to be notified to the user; (4) sidelink positioning needs to be notified to the user and confirmed by the user, and sidelink positioning is allowed with user authorization or when there is no response; or (5) sidelink positioning needs to be notified to the user and confirmed by the user, and sidelink positioning is allowed with user authorization. The privacy configuration for absolute positioning may be any one of the following: (1) positioning is not allowed; (2) positioning is allowed and does not need to be notified to a user; (3) positioning is allowed and needs to be notified to the user; (4) positioning needs to be notified to the user and confirmed by the user, and positioning is allowed with user authorization or when there is no response; or (5) positioning needs to be notified to the user and confirmed by the user, and positioning is allowed with user authorization.

Positioning privacy subscription data indicates whether positioning is allowed when a UE is disconnected from a network or needs to be positioned via a relay UE in this application. The positioning privacy subscription data may coexist with the privacy configuration in the existing standard protocol. Alternatively, the positioning privacy subscription data may be used to replace the existing privacy configuration, that is, the positioning privacy subscription data is also applicable to all cases, and in this case, may directly indicate whether the UE allows positioning.

In correspondence to the positioning type, the positioning privacy subscription data may be positioning privacy subscription data for absolute positioning, or may be positioning privacy subscription data for the sidelink positioning/ranging service. Therefore, the positioning privacy subscription data may be understood as whether the UE allows a positioning service when the UE is disconnected from the network or needs to be positioned via the relay UE, that is, when the UE cannot be notified and/or user confirmation cannot be performed, or may be understood as whether the UE allows a positioning service based on network-assisted sidelink positioning. The positioning privacy subscription data has two values: positioning allowed and positioning not allowed.

A notification indication is used to notify the UE that the UE is to be positioned. The notification indication may include identification information of the positioning client, and indicates that the positioning client is to obtain a positioning result for the UE. The notification indication may alternatively be independent of the identification information of the positioning client.

Indication information indicating that user confirmation is required: is used to obtain positioning authorization of the UE user. The indication information indicating that the user confirmation is required may be a part of the notification indication, or may be independent of the notification indication.

The following describes in detail a privacy configuration verification method and a related device in this application with reference to FIG. 2 to FIG. 16.

FIG. 2 shows a privacy configuration verification method according to an embodiment of this application. The method includes the following steps.

S201: An access and mobility management AMF network element receives a first positioning service request sent by a first network element.

The first network element may be a GMLC, an NEF, or another network function (Network Function, NF) network element.

The first positioning service request includes identification information of a first user equipment UE and first indication information, the first UE is a target UE to be positioned, and the first indication information indicates a positioning-related privacy verification action of the first UE. The first indication information may be a positioning-related privacy configuration of the first UE, or may be generated based on the positioning-related privacy configuration of the first UE.

For example, when the first positioning service request is used to request an absolute location of the first UE, the privacy configuration or the first indication information may be any one of the following:
(1) positioning is not allowed;
(2) positioning is allowed and does not need to be notified to a user;
(3) positioning is allowed and needs to be notified to the user;
(4) positioning needs to be notified to the user and confirmed by the user, and positioning is allowed with user authorization or when there is no response; or
(5) positioning needs to be notified to the user and confirmed by the user, and positioning is allowed with user authorization.

User authorization corresponds to user confirmation, that is, when positioning needs to be confirmed by the user, if user authorization is obtained, it is considered that user confirmation is obtained. Therefore, in (4) and (5), user authorization is equivalent to user confirmation.

S202: The AMF sends a second positioning service request to a second UE when the AMF cannot establish a connection to the first UE.

The second positioning service request is sent based on the first indication information.

Optionally, content or an information element included in the second positioning service request varies based on content indicated by the first indication information or based on the privacy configuration of the first UE.

For example, when the first indication information indicates that the first UE needs to be notified, the second positioning service request includes a notification indication and/or identification information of a positioning client and a notification indication and/or identification information of a positioning client.

When the first indication information indicates that the first UE needs to be notified and user confirmation needs to be obtained, the second positioning service request further includes indication information indicating that the user confirmation is required, that is, includes the notification indication, the identification information of the client, and the indication information indicating that the user confirmation is required.

A trigger condition under which the second positioning service request includes the notification indication and/or the identification information of the positioning client, and/or the indication information indicating that the user confirmation is required includes at least one of the following:

The first indication information indicates that a privacy configuration of the first UE needs to be notified to a user and/or confirmed by the user;
the AMF determines that a connection to the first UE cannot be established; or
the AMF determines that a notification response and/or a confirmation response related to the first UE are/is not received, where the notification response and/or the confirmation response are/is responses/a response generated after verification is performed on the privacy configuration of the first UE.

S203: The AMF receives a second positioning service response sent by the second UE.

The second positioning service response indicates a privacy configuration verification result of the first UE. The second UE may be selected by the AMF, or may be selected by an LMF. This is not limited in this application.

Optionally, an information element included in the second positioning service response corresponds to the second positioning service request. For example, when the second positioning service request includes the notification indication and/or the identification information of the positioning client and the notification indication, the second positioning service response includes a notification response message corresponding to the notification indication; or
when the second positioning service request includes the notification indication and/or the identification information of the positioning client, and the indication information indicating that the user confirmation is required, the second positioning service response further includes:
a positioning privacy indication corresponding to the indication information, where the positioning privacy indication indicates whether the first UE allows positioning.

In a possible implementation, when the second positioning service request includes the notification indication and/or the identification information of the positioning client, and the indication information indicating that the user confirmation is required, the second positioning service response may alternatively include the positioning privacy indication instead of the notification response message. In this case, the positioning privacy indication may function as the notification response message. When receiving the positioning privacy indication, the AMF may determine that the notification indication of the AMF has been received by the second UE.

Optionally, the second positioning service response further includes:
applicable time of the positioning privacy indication.

S204: The AMF sends a first positioning service response to the first network element.

Content included in the first positioning service response is determined based on content in the second positioning service response, and may include, for example, the notification response message, may further include the positioning privacy indication, and optionally, may further include location information of the first UE. The first positioning service request may be used to request the absolute location of the first UE, or used to request a relative location between the first UE and the second UE, for example, a distance and/or an angle between the first UE and the second UE.

Therefore, the manner in this embodiment of this application is not only applicable to a scenario in which the absolute location of the first UE is obtained by using a positioning service based on network-assisted sidelink positioning, but also applicable to a scenario in which the relative location between the first UE and the second UE is obtained through a sidelink positioning/ranging service.

The location information in the first positioning service response corresponds to the first positioning service request. Therefore, the location information may be the absolute location of the first UE, or may be the relative location of the first UE.

When the first positioning service request is used to request the relative location between the first UE and the second UE, the privacy configuration may be any one of the following:
(1) sidelink positioning is not allowed;
(2) sidelink positioning is allowed and does not need to be notified to a user;
(3) sidelink positioning is allowed and needs to be notified to the user;
(4) positioning needs to be notified to the user and confirmed by the user, and sidelink positioning is allowed with user authorization or when there is no response; or
(5) positioning needs to be notified to the user and confirmed by the user, and sidelink positioning is allowed with user authorization.

Optionally, the AMF may directly communicate with the second UE, for example, send the second positioning service request carrying the identification information of the first UE to the second UE, and receive the second positioning service response sent by the second UE. Alternatively, the AMF may communicate with the second UE via the LMF. For example, the second positioning service request may be sent by the AMF to the LMF. After processing the second positioning service request, the LMF selects the second UE, and sends the second positioning service request to the second UE. After receiving a privacy verification response sent by the first UE, the second UE may send the second positioning service response to the LMF. The LMF then sends the first positioning service response to the first network element based on the second positioning service response. The AMF that serves the second UE may be the same as or different from the AMF that serves the first UE.

In this embodiment of this application, the AMF implements indirect communication via the second UE, namely, a UE that establishes a connection to the first UE, and may notify the first UE of information related to a positioning service. In addition, when the first UE needs to perform verification on the positioning-related privacy configuration, the AMF receives the privacy configuration verification result, namely, the positioning privacy indication, of the first UE via the second UE. In this way, when the AMF cannot establish a connection to the first UE, privacy configuration verification with the first UE is completed, a function of a related device is extended, and system compatibility and universality are improved.

With reference to FIG. 2, the following describes in detail a procedure of communicating with the second UE and the first UE via the LMF according to an embodiment of this application. FIG. 3A and FIG. 3B show another privacy configuration verification method according to an embodiment of this application. The method includes the following steps.

S301: Registration, with a network-assisted sidelink positioning capability.

In this step, a network side may obtain location information of a candidate UE. For example, the candidate UE registers with the network, and an AMF, an LMF, or a GLMC obtains and stores the location information of the candidate UE.

There may be one or more candidate UEs. This is not limited herein.

When sidelink positioning is performed, before a UE is selected as a positioned UE, the UE may be referred to as a candidate UE. After being selected as a positioned UE, the UE may be referred to as a positioned UE.

S302: Positioning service request, authorization, and privacy verification.

In this step, a positioning client or an application function network element initiates a positioning service request to the GMLC, where the request message carries identification information of a target UE, namely, a first UE. For example, the positioning client or the application function network element may directly send the positioning service request to the GMLC, or may send the positioning service request to the GMLC via an NEF.

The GLMC may request a privacy configuration of the target UE from a UDM, and the UDM returns the privacy configuration of the first UE to the GLMC. For example, the privacy configuration includes:
(1) positioning is not allowed;
(2) positioning is allowed and does not need to be notified to a user;
(3) positioning is allowed and needs to be notified to the user;
(4) positioning needs to be notified to the user and confirmed by the user, and positioning is allowed with user authorization or when there is no response; or
(5) positioning needs to be notified to the user and confirmed by the user, and positioning is allowed with user authorization.

Optionally, the privacy configuration may further include valid time and a valid geographical range of the privacy configuration.

S303: Determine a serving AMF.

The GLMC requests the serving AMF of the target UE from the UDM, and the UDM returns a network address of the serving AMF to the GLMC.

S304: Send a positioning service request.

The GLMC sends the positioning service request, namely, the first positioning service request in FIG. 2, to the serving AMF based on the network address of the serving AMF, where the request message carries positioning attribute information such as the identification information of the first UE and a client type.

Based on the privacy configuration of the first UE, the positioning service request message may further include first indication information. For example, the first indication information may indicate:
(1) positioning is allowed and does not need to be notified to a user;
(2) positioning is allowed and needs to be notified to the user;
(3) positioning needs to be notified to the user and confirmed by the user, and positioning is allowed when there is no response; or
(4) positioning needs to be notified to the user and confirmed by the user, and positioning is not allowed when there is no response.

S305: Network-triggered service request.

When the target UE is in idle mode, the AMF initiates a network-triggered service request procedure, that is, the AMF triggers a paging procedure, to establish a connection between the network and the target UE.

S306: Paging fails.

S307: Send a positioning service request.

If the AMF fails to page the first UE, the AMF may determine, based on the first indication information, whether to notify the user and whether user confirmation is required. When only notification to the user is required, the positioning service request sent by the AMF to the LMF, namely, the second positioning service request in FIG. 2, may carry a notification indication that needs to be notified to the UE and/or identification information of the positioning client. Further, when the user confirmation is further required, the second positioning service request further carries indication information indicating that the user confirmation is required.

In this way, when the AMF cannot establish a connection to the first UE, the LMF and the positioned UE, namely, a second UE, may be used to provide a notification response to and perform user confirmation on the first UE, to implement verification on the privacy configuration in specific scenarios.

A trigger condition under which the positioning service request sent by the AMF includes the notification indication and/or the identification information of the positioning client, and/or the indication information indicating that the user confirmation is required includes: The AMF determines that a notification response and/or a confirmation response related to the first UE are/is not received, where the notification response and/or the confirmation response are/is responses/a response generated after verification is performed on the privacy configuration of the first UE.

The notification response and/or the confirmation response may be directly sent by the first UE, or may be sent by the second UE. Such a trigger condition is set, so that when a quantity of selected second UEs is large, no triggering is required only when one UE (one of the first UE or the second UE) provides a notification response and/or confirmation response, to avoid a plurality of times of notification and/or user confirmation for the first UE, and reduce user load.

S308: Sequentially select positioned UEs.

Because there may be one or more positioned UEs, S308 may be used as an optional step. When there are a plurality of positioned UEs, one or more UEs are selected from the plurality of positioned UEs to send a sidelink positioning/ranging service request. In this embodiment of this application, one second UE is selected for description. When there are a plurality of second UEs, an interaction procedure is similar to this. Details are not described herein again.

S309: Send the sidelink positioning/ranging service request.

For example, if the second UE is selected as a positioned UE, the second UE receives the sidelink positioning/ranging service request sent by the AMF, where the sidelink positioning/ranging service request includes the identification information of the first UE, the second UE is a UE connected to the AMF, and the first UE is a target UE to be positioned.

The sidelink positioning/ranging service request includes the notification indication and/or the identification information of the positioning client.

When the privacy configuration is that user confirmation is required, the sidelink positioning/ranging service request further includes the indication information indicating that the user confirmation is required.

A trigger condition under which the sidelink positioning/ranging service request includes the notification indication and/or the identification information of the positioning client, and/or the indication information indicating that the user confirmation is required includes:

The AMF determines that a notification response and/or a confirmation response related to the first UE are/is not received, where the notification response and/or the confirmation response are/is responses/a response generated after verification is performed on the privacy configuration of the first UE.

Optionally, the sidelink positioning/ranging service request may further carry a positioning type indication. The positioning type indication includes a positioning service based on network-assisted sidelink positioning or a sidelink positioning/ranging service. When the positioning type indication is the positioning service based on the network-assisted sidelink positioning, it indicates that a purpose of sidelink positioning is to calculate an absolute location of the first UE. When the positioning type indication is the sidelink positioning/ranging service, it indicates that a purpose of sidelink positioning is to calculate a relative location, for example, a distance and/or an angle, between the first UE and the second UE.

S310: Perform a discovery procedure.

The second UE sends a discovery message to the first UE, and establishes a connection to the first UE.

For example, the second UE may send a broadcast message or a unicast message to the first UE, and establish a PC5 connection to the first UE.

S311: Send a privacy verification request.

The second UE sends the privacy verification request to the first UE, where the privacy verification request is used to notify the first UE to perform verification on a privacy configuration.

The second UE determines, based on an information element in the sidelink positioning/ranging service request, whether to notify the first UE and/or whether confirmation of the first UE is required.

For example, when the sidelink positioning/ranging service request indicates that only notification to the first UE is required, or when the privacy configuration is that the first UE needs to be notified, the privacy verification request includes the notification indication and/or the identification information of the positioning client.

When the sidelink positioning/ranging service request indicates that the first UE is notified and user confirmation is required, or when the privacy configuration is that the first UE needs to be notified and user confirmation is required, the privacy verification request includes the notification indication, the identification information of a positioning client, and the indication information indicating that the user confirmation is required.

When the sidelink positioning/ranging service request does not carry the notification indication or the privacy configuration is that the user does not need to be notified, step 311 is skipped.

S312: Send a privacy verification response.

The second UE receives the privacy verification response sent by the first UE, where the privacy verification response indicates a privacy configuration verification result of the first UE.

An information element included in the privacy verification response corresponds to an information element included in the privacy verification request in step S311.

For example, when the privacy verification request includes the notification indication, the privacy verification response includes a notification response message; or when the privacy verification request includes the notification indication and the indication information indicating that the user confirmation is required, the privacy verification response includes the notification response message and a positioning privacy indication.

The positioning privacy indication may be: (1) positioning is allowed; or (2) positioning is not allowed. Optionally, the privacy verification response may further carry applicable time of the positioning privacy indication, for example, start time and end time.

In addition, when sending the applicable time, the first UE may further determine a type of an interface for sending the privacy verification response. If it is determined that the type of the interface is an interface for communicating with the AMF, the applicable time may be sent; or if it is determined that the type of the interface is a PC5 interface, namely, a communication interface between UEs, the applicable time of the positioning privacy indication may not be carried. In this way, the positioning privacy indication sent through the PC5 interface is used only as a one-time indication, and subscription data on a UDM side is not updated, to avoid reading and tampering with the positioning privacy indication on a first UE side, and protect privacy of the first UE.

For example, messages in step S311 and step S312 are PC5 messages.

S313: Send a sidelink positioning/ranging service response.

In correspondence to step S312, when the sidelink positioning/ranging service request includes the notification indication and/or the identification information of the positioning client, the sidelink positioning/ranging service response includes the notification response message corresponding to the notification indication; or
when the sidelink positioning/ranging service request includes the notification indication and/or the identification information of the positioning client, and the indication information indicating that the user confirmation is required, the sidelink positioning/ranging service response further includes:
the positioning privacy indication corresponding to the indication information, where the positioning privacy indication indicates whether the first UE allows positioning.

The second UE sends the sidelink positioning/ranging service response to the AMF based on the privacy verification response.

Optionally, the sidelink positioning/ranging service response further includes:
the applicable time of the positioning privacy indication.

When the positioning privacy indication indicates that positioning is not allowed, the sidelink positioning/ranging service response may carry a reject indication, to end a sidelink positioning/ranging service procedure.

Optionally, the second UE may further send a verification result notification message to the AMF, where the verification result notification message includes the positioning privacy indication.

Further, the verification result notification message further includes:
a notification complete indication indicating that the first UE has completed verification notification for the second UE.

Optionally, the verification result notification message may be an independent message, or may be carried in the sidelink positioning/ranging service response. This is not limited in embodiments of this application.

In addition, the sidelink positioning/ranging service response may be sent after measurement is completed or a sidelink positioning result is calculated, or may be sent before measurement starts. This is not limited in embodiments of this application.

S314: Perform sidelink positioning.

The second UE may report a sidelink positioning/ranging measurement report or a sidelink positioning/ranging result to the LMF.

Optionally, the LMF may further trigger a procedure of positioning the second UE, to obtain a current location of the second UE, and determine the absolute location of the first UE based on the current location of the second UE and the sidelink positioning/ranging measurement report or result.

S315: Send a positioning service response.

The LMF reports the location information of the first UE. The positioning service response herein is the second positioning service response in FIG. 2.

For example, when receiving one or more information elements selected from the positioning privacy indication, the applicable time, and the notification complete indication, the LMF includes the received information elements such as the positioning privacy indication, the applicable time, and the notification complete indication in the positioning service response, and report the positioning service response.

In addition, when receiving the positioning privacy indication and/or the notification complete indication, the AMF may mark that the first UE has completed verification on the privacy configuration.

S316: Determine not to update the subscription data.

In S316 as an optional step, when receiving the information elements such as the positioning privacy indication and the applicable time that are sent by the LMF, the AMF may not send a parameter update request message to the UDM, that is, does not update the subscription data in the UDM. In this way, the positioning privacy indication transmitted through the PC5 interface is used only as a one-time indication, and the subscription data is not updated, to avoid reading and tampering with the positioning privacy indication by the first UE, and protect privacy of the first UE.

S317: Send a positioning service response.

The AMF provides a location of the target UE for the GLMF. The positioning service response herein is the first positioning service response in FIG. 2.

S318: Perform a positioning service response procedure.

The GLMC provides the location of the target UE for the positioning client or the application function network element.

In this embodiment of this application, how the AMF communicates with the first UE via the LMF and the second UE when the AMF cannot establish a connection to the first UE is described in detail, to complete verification on the privacy configuration of the first UE. In this process, an information exchange procedure of the AMF-the LMF-the second UE-the first UE is improved, and functions of each device in the information exchange procedure and information carried in each message in the information exchange procedure are extended. The method is compatible with an existing standard protocol procedure, and can also be used to cope with a case in which the AMF cannot establish a connection to the first UE. Therefore, compatibility and universality of an entire system are greatly improved.

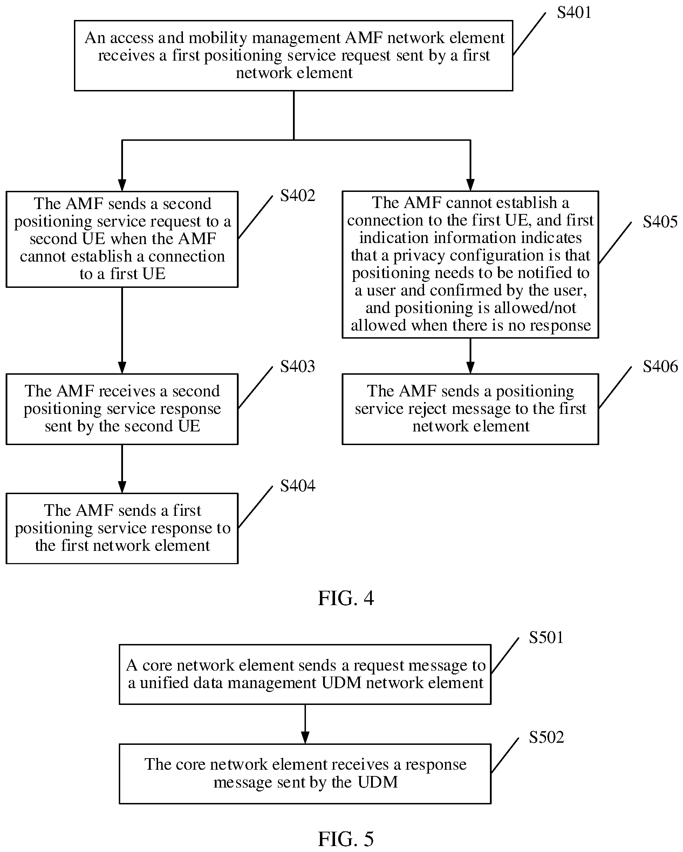

Optionally, the embodiments in FIG. 2, and FIG. 3A and FIG. 3B focus on privacy verification and positioning of the first UE. In another possible implementation, refer to FIG. 4. Step S401 to step S404 are similar to step S201 to step S204, and details are not described herein again. The method further includes the following steps:

S405: The AMF cannot establish a connection to the first UE, and the first indication information indicates that the privacy configuration is that positioning needs to be notified to the user and confirmed by the user, and positioning is allowed/not allowed when there is no response.

S406: The AMF sends a positioning service reject message to the first network element.

Refer to FIG. 3A and FIG. 3B together. After step S306, the AMF may determine, based on the first indication information, whether to perform a sidelink positioning/ranging service.

For example, (1) when the first indication information indicates that positioning is allowed and does not need to be notified to the user, step S307 may be initiated;
(2) when the first indication information indicates that positioning is allowed and needs to be notified to the user, step S307 may be initiated, and the positioning service request carries the identification information of the first UE, and optionally, may further carry other information such as the notification indication and/or the identification information of the positioning client;
(3) when the first indication information indicates that positioning needs to be notified to the user and confirmed by the user, and positioning is allowed when there is no response, step S307 may be initiated, and optionally, information such as the notification indication and/or the identification information of the positioning client, and the indication information indicating that the user confirmation is required is carried, where in another possible implementation, the AMF rejects the positioning request of the GLMC, that is, initiates step S315, and includes a reject cause value, to indicate that the AMF cannot establish a connection to the first UE or cannot obtain the user confirmation; or
(4) when the first indication information indicates that positioning needs to be notified to the user and confirmed by the user, and positioning is not allowed when there is no response, step S307 may be initiated, or the AMF may reject the positioning request of the GLMC, that is, initiate step S315, and include a reject cause value, to indicate that the AMF cannot establish a connection to the first UE or cannot obtain the user confirmation.

The positioning service reject message in step S406 may be an independent message, or may be carried in the positioning service response in step S315 in FIG. 3B. This is not limited in embodiments of this application.

In this way, when the AMF cannot establish a connection to the first UE (for example, paging fails), if the AMF determines that user confirmation cannot be performed, and the first indication information indicates that the user confirmation is required, the AMF may reject the positioning service request. It should be noted that, this manner of rejecting the positioning service request may coexist with the embodiment shown in FIG. 2, or FIG. 3A and FIG. 3B, or may exist independently. In other words, a procedure of rejecting the positioning service request is directly started provided that the foregoing situation occurs. In this way, changes to the system can be reduced, and efficiency of processing the positioning service by the system can be improved.

In addition to the manners shown in FIG. 2, and FIG. 3A and FIG. 3B, the positioning privacy subscription data of the UE may alternatively be stored in the UDM. The GMLC or the AMF may directly obtain the positioning privacy subscription data from the UDM without performing verification on the privacy configuration with the UE, to obtain a manner of processing, by the UE, information that originally needs to be notified or needs to be confirmed. FIG. 5 is a schematic flowchart of still another privacy configuration verification method according to an embodiment of this application. The method includes the following steps.

S501: A core network element sends a request message to a unified data management UDM network element.

The request message includes identification information of a UE and positioning privacy subscription data that is requested to be obtained, and the positioning privacy subscription data indicates whether positioning is allowed when the UE is disconnected from a network or needs to be positioned via a relay UE.

S502: The core network element receives a response message sent by the UDM, where the response message includes the positioning privacy subscription data of the UE.

Correspondingly, the UDM receives the request message sent by the core network element, and sends the response message to the core network element.

Optionally, the positioning privacy subscription data has two values: positioning allowed and positioning not allowed.

The positioning privacy subscription data may also be understood as whether the UE allows a positioning service based on network-assisted sidelink positioning, or may be understood as whether the UE allows a positioning service when the UE cannot be notified and/or user confirmation cannot be performed.

Optionally, the positioning privacy subscription data included in the response message may be a piece of indication information indicating whether positioning is allowed, or may be specific positioning subscription privacy data.

After obtaining the positioning privacy subscription data, the core network element may further determine, based on the privacy subscription data, whether to position the UE.

The request message is further used to request to obtain a positioning-related privacy configuration of the UE, and the response message further includes the positioning-related privacy configuration of the UE.

The positioning privacy subscription data may coexist with the privacy configuration, or the privacy configuration may be replaced with the positioning privacy subscription data. This is not limited in embodiments of this application. When the privacy configuration is replaced with the positioning privacy subscription data, regardless of whether an AMF can establish a connection to the UE, the AMF may obtain the positioning privacy subscription data of the UE by interacting with the UDM, and complete verification on the privacy configuration in advance or does not need to perform verification on the privacy configuration, that is, does not need to interact with the UE.

Optionally, before step S501, the method further includes:

The core network element determines that the UE is unreachable, that is, the access and mobility management AMF network element cannot establish a connection to the UE. For example, when determining that the UE is unreachable, the core network element sends a request message to the UDM, where the request message may be used to request the positioning privacy subscription data.

In an optional implementation, the request message in step S501 includes the identification information of the UE, and the response message in step S502 includes the positioning privacy subscription data of the UE and the privacy configuration of the UE.

The core network element is the AMF or a gateway mobile location center GLMC.

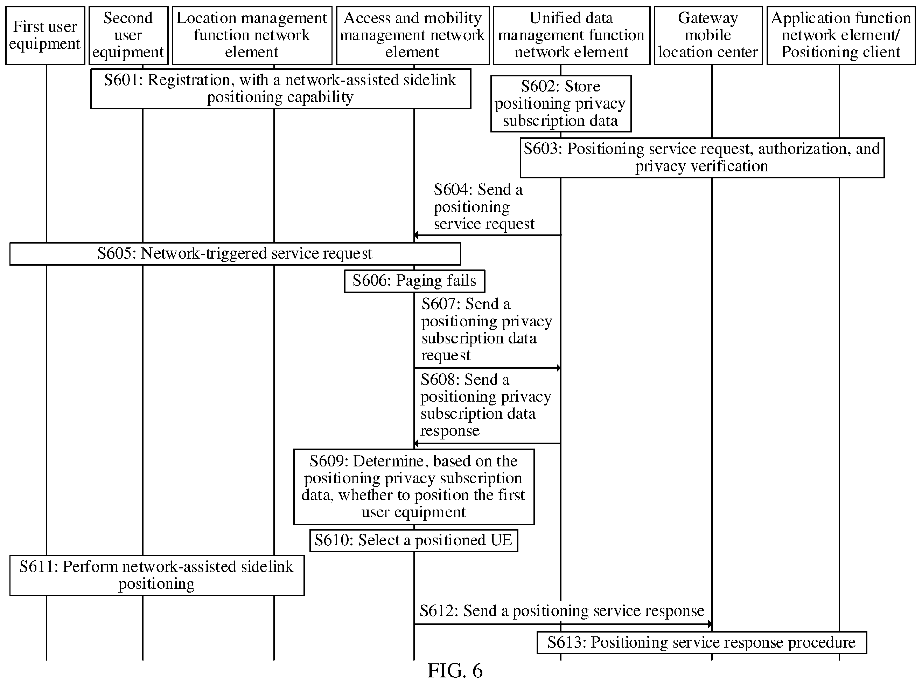

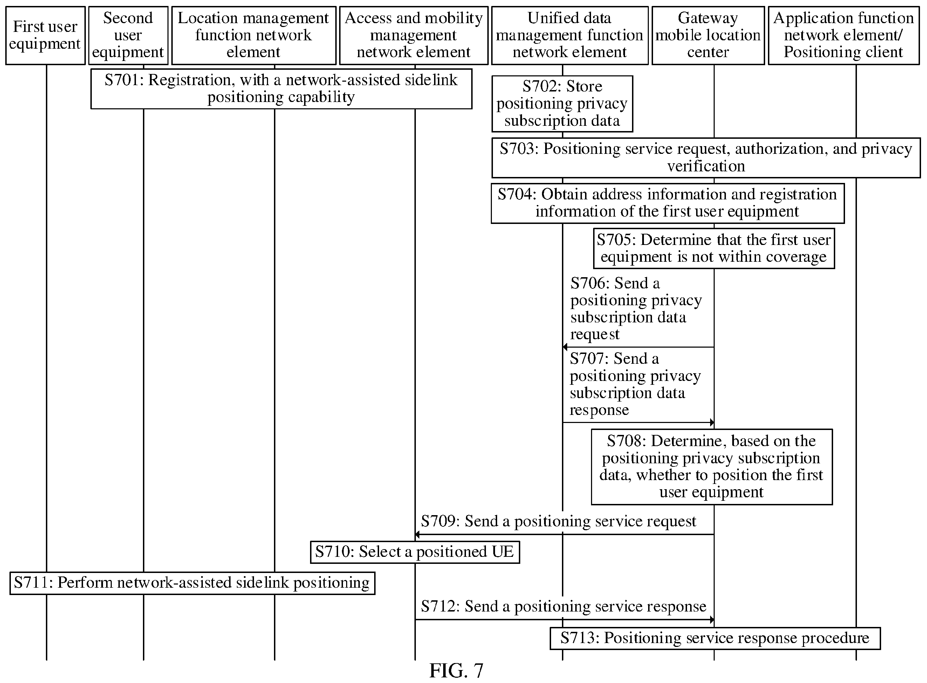

Specific interaction procedures vary with different core network elements. For details, refer to FIG. 6 and FIG. 7. FIG. 6 is a schematic flowchart of still another privacy configuration verification method according to an embodiment of this application. In FIG. 6, a core network element is an AMF. S601 is the same as S301 in FIG. 3A, S603 is the same as S302, S604 to S606 are the same as S304 to S306, and S612 and S613 are the same as S317 and S318. Details are not described herein again. The method specifically includes the following steps.

S601: Registration, with a network-assisted sidelink positioning capability.

S602: Store positioning privacy subscription data.

There is no strict time sequence relationship between step S602 and step S601, and this is not limited herein.

S603: Positioning service request, authorization, and privacy verification.

S604: Send a positioning service request.

S605: Network-triggered service request.

S606: Paging fails.

S607: Send a positioning privacy subscription data request.

The AMF requests positioning privacy subscription data of a first UE from a UDM.

S608: Send a positioning privacy subscription data response.

The UDM returns the positioning privacy subscription data of the first UE.

S609: Determine, based on the positioning privacy subscription data, whether to position the first user equipment.

When the positioning privacy subscription data indicates that the first UE allows positioning, steps S610 and S611 are initiated to perform network-assisted sidelink positioning; or when the positioning privacy subscription data indicates that the first UE does not allow positioning, steps S610 and S611 are skipped, and a reject cause value is carried in step S612.

S610: Select a positioned UE.

S611: Perform network-assisted sidelink positioning.

S612: Send a positioning service response.

S613: Perform a positioning service response procedure.

Optionally, the positioning privacy subscription data may alternatively be carried in step S604. In this way, step S609 may be directly performed, and then a subsequent procedure is performed based on an indication of the positioning privacy subscription data.

In this embodiment of this application, the positioning privacy subscription data is stored in UE subscription data stored in the UDM, to explicitly indicate whether positioning is allowed when the UE is disconnected from a network or needs to be positioned via a relay UE. In this way, the AMF can learn of a status of the UE in advance, to complete verification on a privacy configuration in advance. The AMF may determine, based on the positioning privacy subscription data, whether to perform a subsequent positioning operation, to extend a function of the AMF, improve positioning efficiency, and ensure privacy security of the first UE.

FIG. 7 is a schematic flowchart of still another privacy configuration verification method according to an embodiment of this application. In FIG. 7, a core network element is a GMLC. S701 is the same as S301 in FIG. 3A, S703 is the same as S302, S711 to S713 are the same as S314, S317, and S318. Details are not described herein again. The method specifically includes the following steps.

S701: Registration, with a network-assisted sidelink positioning capability.

S702: Store positioning privacy subscription data.

S703: Positioning service request, authorization, and privacy verification.

S704: Obtain address information and registration information of a first user equipment.

The GMLC obtains the address information, the registration information, and the like of the first UE from a UDM.

S705: Determine that the first user equipment is not within coverage.

The GMLC determines, based on the obtained address information and registration information, and the like of the first UE, that the first UE is not within coverage.

S706: Send a positioning privacy subscription data request.

The GLMC requests positioning privacy subscription data of the first UE from the UDM.

S707: Send a positioning privacy subscription data response.

The UDM returns the positioning privacy subscription data of the first UE.

S708: Determine, based on the positioning privacy subscription data, whether to position the first user equipment.

When the positioning privacy subscription data indicates that the first UE allows positioning, steps S709 to S711 are initiated to perform network-assisted sidelink positioning; or when the positioning privacy subscription data indicates that the first UE does not allow positioning, steps S709 to S711 are skipped, and a reject cause value is carried in step S712.

S709: Send a positioning service request.

S710: Select a positioned UE.

S711: Perform network-assisted sidelink positioning.

S712: Send a positioning service response.

S713: Perform a positioning service response procedure.

In this embodiment of this application, the positioning privacy subscription data is stored in UE subscription data stored in the UDM, to explicitly indicate whether positioning is allowed when the UE is disconnected from a network or needs to be positioned via a relay UE. In this way, the GMLC can learn of a status of the UE in advance. The GMLC may determine, based on the positioning privacy subscription data, whether to perform a subsequent positioning operation, to extend a function of the GMLC, improve positioning efficiency, and ensure privacy security of the first UE.

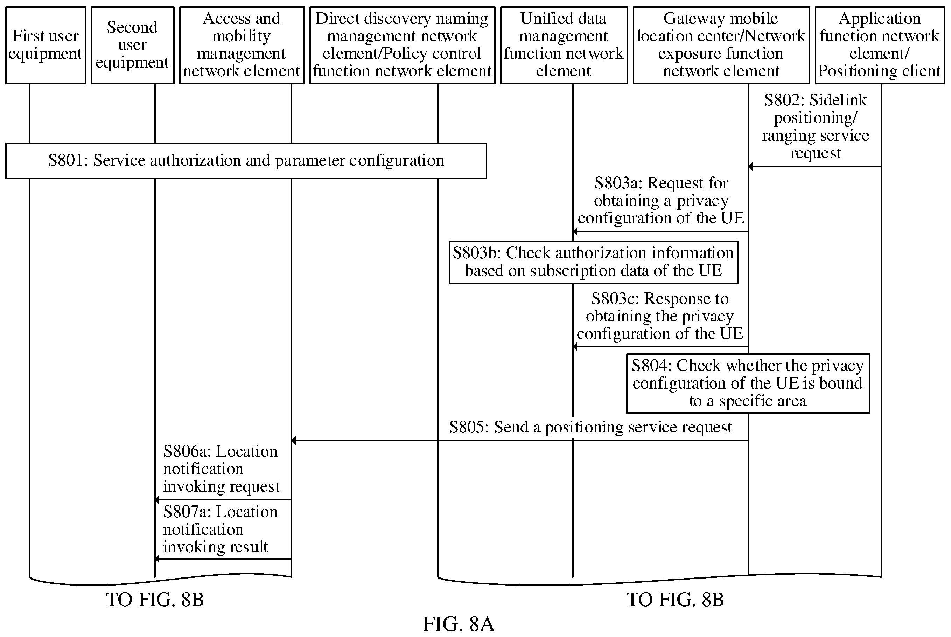

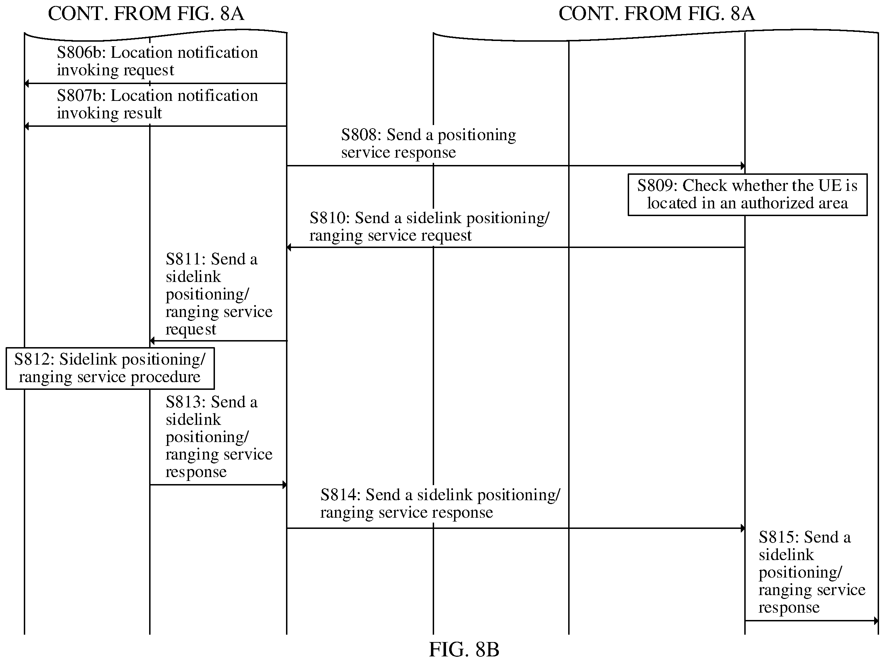

FIG. 2 to FIG. 7 mainly describe a process of obtaining the absolute location of the first UE by using a positioning service based on network-assisted sidelink positioning. Various implementations are also applicable to a process of obtaining a relative location between the first UE and the second UE through a sidelink positioning/ranging service. FIG. 8A and FIG. 8B are a schematic flowchart of obtaining a relative location between a first UE and a second UE based on a sidelink positioning/ranging service. The process specifically includes the following steps.

S801: Perform service authorization and parameter configuration.

A first UE and a second UE obtain configuration parameters from a network, for example, sidelink positioning role information. For example, the first UE is a target UE to be positioned, and the second UE is a positioned UE.

S802: Sidelink positioning/ranging service request.

A positioning server or an application function network element initiates the sidelink positioning/ranging service request to a core network element (which may be a GMLC/an NEF or another network element), where the request message carries identification information of the first UE and the second UE. For example, the positioning server or the application function network element may directly send the sidelink positioning/ranging service request to the core network element, or may send the sidelink positioning/ranging service request to the core network element via an NEF.

For example, the application function network element may be an external server, or may be a core network element.

S803a: Request for obtaining a privacy configuration of the UE.

S803b: Check authorization information based on subscription data of the UE.

S803c: Response to obtaining the privacy configuration of the UE.

The core network element requests the privacy configurations of the first UE and the second UE from the UDM, and the UDM returns the privacy configurations of the first UE and the second UE to the core network element. For example, the privacy configuration includes:
(1) sidelink positioning is not allowed;
(2) sidelink positioning is allowed and does not need to be notified to a user;
(3) sidelink positioning is allowed and needs to be notified to the user;
(4) positioning needs to be notified to the user and confirmed by the user, and sidelink positioning is allowed with user authorization or when there is no response; or
(5) positioning needs to be notified to the user and confirmed by the user, and sidelink positioning is allowed with user authorization.

Optionally, the privacy configuration may further include valid time and a valid geographical range of the privacy configuration.

S804: Check whether the privacy configuration of the UE is bound to a specific area. For example, when the privacy configuration of the UE is bound to a specific area, S808 to S810 are performed; or when the privacy configuration of the UE is not bound to a specific area, S808 to S810 are skipped.

S805: Send a positioning service request.

The core network element sends the positioning service request to the AMF, where the request message carries positioning attribute information such as the identification information of the first UE and the second UE and a client type. There may be one or more AMFs, that is, AMFs serving the first UE and the second UE may be the same or may be different.

Based on the privacy configurations of the first UE and the second UE, the positioning service request may further include first indication information. For example, the first indication information may indicate:
(1) sidelink positioning is allowed and does not need to be notified to a user;
(2) sidelink positioning is allowed and needs to be notified to the user;
(3) positioning needs to be notified to the user and confirmed by the user, and sidelink positioning is allowed when there is no response; or
(4) positioning needs to be notified to the user and confirmed by the user, and sidelink positioning is not allowed when there is no response.

S806a: Location notification invoking request.

S807a: Location notification invoking result.

S806b: Location notification invoking request.

S807b: Location notification invoking result.

When the first UE, namely, the target UE, is in idle mode, the AMF initiates a network-triggered service request procedure, that is, the AMF triggers a paging procedure, to establish a connection between the network and the first UE.

For example, when the paging succeeds, the AMF determines, based on the first indication information, whether to notify the user and whether user confirmation is required. When only notification is required, the AMF sends a NAS message to the first UE, where the message carries a notification indication and/or identification information of a positioning client; or when notification is required and the user confirmation is required, the message further needs to carry indication information indicating that the user confirmation is required.

The AMF receives a response message of the first UE, where the message carries a positioning privacy indication, and the positioning privacy indication may be:
(1) sidelink positioning is allowed; or (2) sidelink positioning is not allowed, where applicable time, for example, start time and end time, of the sidelink positioning privacy indication is optionally carried.

S808: Send a positioning service response.

Optionally, the AMF reports the positioning privacy indication to the core network element.

S809: Check whether the UE is located in an authorized area.

Optionally, the core network element determines whether to continue a sidelink positioning service.

S810: Send the sidelink positioning/ranging service request.

Optionally, the core network element sends a measurement positioning request to the AMF.

S811: Send the sidelink positioning/ranging service request.

The AMF determines to trigger network-assisted sidelink positioning, and sends a NAS request to the second UE.

S812: Perform a sidelink positioning/ranging service procedure.

The second UE triggers sidelink positioning, including a service discovery procedure and a service execution procedure with the first UE.

S813: Send a sidelink positioning/ranging service response.

The second UE reports a sidelink positioning result to the AMF.

S814: Send the sidelink positioning/ranging service response.

The AMF sends the sidelink positioning result to the core network element.

S815: Send the sidelink positioning/ranging service response.

The core network element sends the sidelink positioning result to the positioning client or the application function network element.

According to the foregoing procedure, a sidelink positioning/ranging service for the first UE may be implemented via the second UE, and the sidelink positioning result, namely, a relative location, for example, a distance and/or an angle, between the first UE and the second UE is reported.

However, when the AMF cannot establish a connection to the first UE, the first UE cannot complete verification on the privacy configuration. Therefore, when the paging fails in steps S806b and S807b, refer to the embodiments shown in FIG. 2, and FIG. 3A and FIG. 3B. The AMF selects a second UE that can establish a connection to the first UE to send the positioning service request, and receives, via the second UE, the positioning service response sent by the first UE, to complete verification on the privacy configuration of the first UE, and complete the sidelink positioning/ranging service for the first UE. That is, after steps S806b and S807b in FIG. 8B, steps similar to S309 to S313 in FIG. 3A and FIG. 3B, for example, S808b to S812b (referring to S309 to S313 in FIG. 3A and FIG. 3B, which are not shown in FIG. 8A and FIG. 8B), are triggered to be performed.

The AMF sends a sidelink positioning/ranging service request to the second UE.

The second UE and the first UE complete a discovery procedure, and establish a connection.

The second UE sends a privacy verification request to the first UE.

The first UE sends a privacy verification response to the second UE.

The second UE sends a sidelink positioning/ranging service response to the AMF. The sidelink positioning/ranging service response carries the positioning privacy indication, to complete verification on the privacy configuration of the first UE.

In another possible implementation, refer to the embodiment shown in FIG. 4. When the paging fails in steps S806b and S807b, the AMF determines that user confirmation cannot be performed, and the first indication information indicates that the user confirmation is required, the AMF may alternatively reject the positioning service request, and feed back a reject indication to the GMLC. For example, refer to step S315 in FIG. 3B. The positioning service response sent in step S808 carries a positioning service reject message, or when the positioning service response is sent in step S808, an independent positioning service reject message is sent, and a reject indication is carried to end the sidelink positioning/ranging service procedure.

In another possible implementation, refer to the embodiment shown in FIG. 6 or FIG. 7. The positioning privacy subscription data of the UE is stored in the UDM, where the positioning privacy subscription data indicates whether sidelink positioning is allowed when the UE is disconnected from the network or needs to be positioned via a relay UE. For example, the positioning privacy subscription data of the first UE is stored. When the paging fails in steps S806b and S807b, that is, after steps S806b and S807b in FIG. 8B, the AMF may trigger execution of steps similar to S607 and S608 in FIG. 6, to request to obtain the positioning privacy subscription data of the first UE from the UDM. If the positioning privacy subscription data of the first UE indicates that the first UE allows sidelink positioning, the AMF may complete sidelink positioning of the first UE via the second UE, or may include the positioning privacy subscription data of the first UE in the first indication information in step S805.

In addition, for the GMLC, the positioning privacy subscription data of the first UE may be obtained in step S803a and step S803c (where optionally, in this case, the privacy configuration of the first UE may alternatively be obtained), or after step S804, steps similar to S705 to S707 in FIG. 7 may be triggered to be performed. When determining that the first UE is not within coverage, the GMLC initiates a request to the UDM to obtain the positioning subscription data of the first UE.

With reference to the manners in FIG. 2, FIG. 4, FIG. 6, and FIG. 7, a problem of performing verification on privacy data of the first UE when the AMF cannot establish a connection to the first UE in a process of obtaining the relative location between the first UE and the second UE based on the sidelink positioning/ranging service can also be resolved.

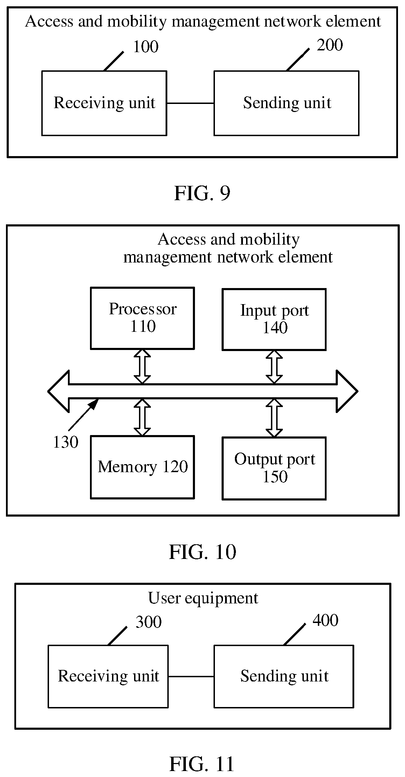

FIG. 9 is a diagram of composition of an access and mobility management network element according to an embodiment of this application. The access and mobility management network element may include:
a receiving unit 100, configured to receive a first positioning service request sent by a first network element, where the first positioning service request includes identification information of a first user equipment UE and first indication information, the first UE is a target UE to be positioned, and the first indication information indicates a positioning-related privacy verification action of the first UE; and
a sending unit 200, configured to send a second positioning service request to a second UE when the access and mobility management AMF network element cannot establish a connection to the first UE, where
the receiving unit 100 is further configured to receive a second positioning service response sent by the second UE, where the second positioning service response indicates a privacy configuration verification result of the first UE, and the second UE is a UE that establishes a connection to the first UE; and
the sending unit 200 is further configured to send a first positioning service response to the first network element.

Optionally, the first positioning service request is used to request an absolute location of the first UE or a relative location between the first UE and the second UE.

Optionally, the second positioning service request is sent by the AMF to a location management function LMF network element, and processed by the LMF and sent to the second UE.

Optionally, when the first indication information indicates that the first UE needs to be notified, the second positioning service request includes a notification indication and/or identification information of a positioning client.

Optionally, when the first indication information indicates that the first UE needs to be notified and user confirmation needs to be obtained, the second positioning service request further includes indication information indicating that the user confirmation is required.

Optionally, a trigger condition under which the second positioning service request includes the notification indication and/or the identification information of the positioning client, and/or the indication information indicating that the user confirmation is required includes at least one of the following:

The first indication information indicates that a privacy configuration of the first UE needs to be notified to a user and/or confirmed by the user;
the AMF determines that a connection to the first UE cannot be established; or
the AMF determines that a notification response and/or a confirmation response related to the first UE are/is not received, where the notification response and/or the confirmation response are/is responses/a response generated after verification is performed on the privacy configuration of the first UE.

Optionally, when the second positioning service request includes a notification indication and/or identification information of a positioning client, the second positioning service response includes a notification response message corresponding to the notification indication; or
when the second positioning service request includes the notification indication and/or the identification information of the positioning client, and indication information indicating that user confirmation is required, the second positioning service response further includes:
a positioning privacy indication corresponding to the indication information, where the positioning privacy indication indicates whether the first UE allows positioning.

Optionally, in either of the following cases:
the AMF cannot establish a connection to the first UE, and the first indication information indicates that a privacy configuration is that positioning needs to be notified to a user and confirmed by the user, and positioning is allowed when there is no response, or
the AMF cannot establish a connection to the first UE, and the first indication information indicates that the privacy configuration is that positioning needs to be notified to a user and confirmed by the user, and positioning is not allowed when there is no response,
the sending unit 200 is further configured to:
   send a positioning service reject message to the first network element, where the positioning service reject message is used to reject the first positioning service request of the first network element.

Optionally, the positioning service reject message includes a reject cause value, and the reject cause value indicates that the AMF cannot establish a connection to the first UE or cannot obtain user confirmation.

For concepts, explanations, detailed descriptions, and other steps that are related to the access and mobility management network element and that are related to the technical solutions provided in embodiments of this application, refer to the descriptions of the access and mobility management network element in the foregoing methods or other embodiments. Details are not described herein again.

FIG. 10 is a diagram of composition of another access and mobility management network element according to an embodiment of this application. The access and mobility management network element may include a processor 110, a memory 120, and a bus 130. The processor 110 is connected to the memory 120 through the bus 130. The memory 120 is configured to store instructions. The processor 110 is configured to execute the instructions stored in the memory 120, to implement the steps performed by the access and mobility management network element in the methods corresponding to FIG. 2 to FIG. 7.

Further, the access and mobility management network element may further include an input port 140 and an output port 150. The processor 110, the memory 120, the input port 140, and the output port 150 may be connected through the bus 130.

The processor 110 is configured to execute the instructions stored in the memory 120, to control the input port 140 to receive a signal and control the output port 150 to send a signal, to complete the steps performed by the access and mobility management network element in the foregoing methods. The input port 140 and the output port 150 may be a same physical entity or different physical entities. When the input port 140 and the output port 150 are a same physical entity, the input port 140 and the output port 150 may be collectively referred to as an input/output port. The memory 120 may be integrated into the processor 110, or may be disposed separately from the processor 110.

In an implementation, it may be considered that functions of the input port 140 and the output port 150 are implemented by using a transceiver circuit or a dedicated transceiver chip. It may be considered that the processor 110 is implemented by using a dedicated processing chip, a processing circuit, a processor, or a general-purpose chip.

In another implementation, it may be considered that the access and mobility management network element provided in this embodiment of this application is implemented by using a general-purpose computer. To be specific, program code implementing functions of the processor 110, the input port 140, and the output port 150 is stored in the memory, and a general-purpose processor executes the code in the memory, to implement the functions of the processor 110, the input port 140, and the output port 150.

For concepts, explanations, detailed descriptions, and other steps that are related to the access and mobility management network element and that are related to the technical solutions provided in embodiments of this application, refer to the descriptions of the network device in the foregoing methods or other embodiments. Details are not described herein again.

FIG. 11 is a diagram of composition of a user equipment according to an embodiment of this application. The user equipment may include:
a receiving unit 300, configured to receive a sidelink positioning/ranging service request sent by an access and mobility management AMF network element, where the sidelink positioning/ranging service request includes identification information of a first UE, a user equipment is a UE connected to the AMF, and the first UE is a target UE; and
a sending unit 400, configured to send a discovery message to the first UE, and establish a connection to the first UE; and
send a privacy verification request to the first UE, where the privacy verification request is used to notify the first UE to perform verification on a privacy configuration, where
the receiving unit 300 is further configured to receive a privacy verification response sent by the first UE, where the privacy verification response indicates a privacy configuration verification result of the first UE; and the sending unit 400 is further configured to send a sidelink positioning/ranging service response to the AMF based on the privacy verification response.

Optionally, when the privacy configuration is that the first UE needs to be notified, the sidelink positioning/ranging service request includes a notification indication and/or identification information of a positioning client.

Optionally, when the privacy configuration is that the first UE needs to be notified and user confirmation is required, the sidelink positioning/ranging service request further includes indication information indicating that the user confirmation is required.

Optionally, a trigger condition under which the sidelink positioning/ranging service request includes the notification indication and/or the identification information of the positioning client, and/or the indication information indicating that the user confirmation is required includes:
the AMF determines that a notification response and/or a confirmation response related to the first UE are/is not received, where the notification response and/or the confirmation response are/is responses/a response generated after verification is performed on the privacy configuration of the first UE.

Optionally, when the sidelink positioning/ranging service request includes a notification indication and/or identification information of a positioning client, the sidelink positioning/ranging service response includes a notification response message corresponding to the notification indication; or
when the sidelink positioning/ranging service request includes the notification indication and/or the identification information of the positioning client, and indication information indicating that user confirmation is required, the sidelink positioning/ranging service response further includes:
a positioning privacy indication corresponding to the indication information, where the positioning privacy indication indicates whether the first UE allows positioning.

Optionally, when the sidelink positioning/ranging service request includes the notification indication and/or the identification information of the positioning client, the privacy verification request includes the notification indication and/or the identification information of the positioning client, and the privacy verification response includes the notification response message corresponding to the notification indication; or
when the sidelink positioning/ranging service request includes the notification indication and/or the identification information of the positioning client, and the indication information indicating that the user confirmation is required, the privacy verification request includes the notification indication and/or the identification information of the positioning client, and the indication information indicating that the user confirmation is required, and the privacy verification response includes the notification response message and the positioning privacy indication corresponding to the indication information.

Optionally, the sending unit 400 is specifically configured to:
send a broadcast message or a unicast message to the first UE, and establish a PC5 connection to the first UE.

Optionally, the sending unit 400 is further configured to:
send a verification result notification message to the AMF, where the verification result notification message includes the positioning privacy indication.

Optionally, the verification result notification message further includes:
a notification complete indication indicating that the first UE has completed verification notification for the user equipment.

For concepts, explanations, detailed descriptions, and other steps that are related to the user equipment and that are related to the technical solutions provided in embodiments of this application, refer to the descriptions of the second UE in the foregoing methods or other embodiments. Details are not described herein again.

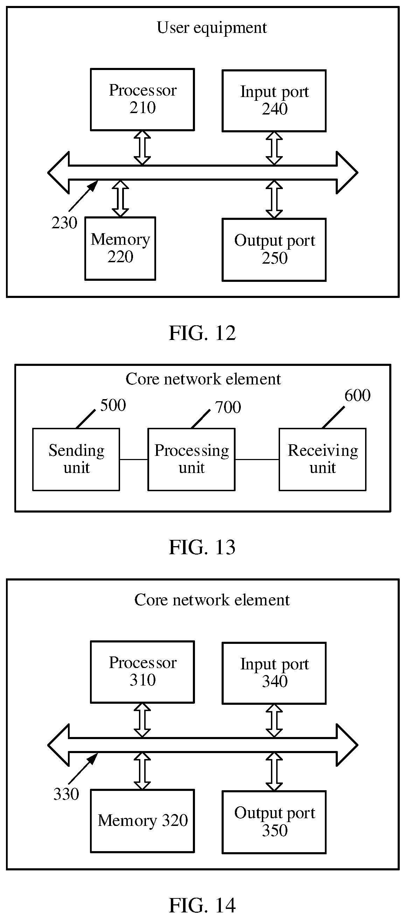

FIG. 12 is a diagram of composition of another user equipment according to an embodiment of this application. The user equipment may include a processor 210, a memory 220, and a bus 230. The processor 210 is connected to the memory 220 through the bus 230. The memory 220 is configured to store instructions. The processor 210 is configured to execute the instructions stored in the memory 220, to implement the steps performed by the second UE in the methods corresponding to FIG. 2 to FIG. 7.

Further, the user equipment may further include an input port 240 and an output port 250. The processor 210, the memory 220, the input port 240, and the output port 250 may be connected through the bus 230.

The processor 210 is configured to execute the instructions stored in the memory 220, to control the input port 240 to receive a signal and control the output port 250 to send a signal, to complete the steps performed by the second UE in the foregoing methods. The input port 240 and the output port 250 may be a same physical entity or different physical entities. When the input port 240 and the output port 250 are a same physical entity, the input port 240 and the output port 250 may be collectively referred to as an input/output port. The memory 220 may be integrated into the processor 210, or may be disposed separately from the processor 210.

In an implementation, it may be considered that functions of the input port 240 and the output port 250 are implemented by using a transceiver circuit or a dedicated transceiver chip. It may be considered that the processor 210 is implemented by using a dedicated processing chip, a processing circuit, a processor, or a general-purpose chip.

In another implementation, it may be considered that the user equipment provided in this embodiment of this application is implemented by using a general-purpose computer. To be specific, program code implementing functions of the processor 210, the input port 240, and the output port 250 is stored in the memory, and a general-purpose processor executes the code in the memory, to implement the functions of the processor 210, the input port 240, and the output port 250.

For concepts, explanations, detailed descriptions, and other steps that are related to the user equipment and that are related to the technical solutions provided in embodiments of this application, refer to the descriptions of the second UE in the foregoing methods or other embodiments. Details are not described herein again.

FIG. 13 is a diagram of composition of a core network element according to an embodiment of this application. The core network element may include:
a sending unit 500, configured to send a request message to a unified data management UDM network element, where the request message includes identification information of a UE and positioning privacy subscription data that is requested to be obtained, and the positioning privacy subscription data indicates whether positioning is allowed when the UE is disconnected from a network or needs to be positioned via a relay UE; and
a receiving unit 600, configured to receive a response message sent by the UDM, where the response message includes the positioning privacy subscription data of the UE.

Optionally, the core network element further includes:
a processing unit 700, configured to determine, based on the privacy subscription data, whether to position the UE.

Optionally, before the sending unit 500 sends the request message to the unified data management UDM network element, the processing unit 700 is further configured to:
determine that an access and mobility management AMF network element cannot establish a connection to the UE.

Optionally, the request message is further used to request to obtain a positioning-related privacy configuration of the UE, and the response message further includes the positioning-related privacy configuration of the UE.

Optionally, the core network element is an AMF or a gateway mobile location center GLMC.

For concepts, explanations, detailed descriptions, and other steps that are related to the core network element and that are related to the technical solutions provided in embodiments of this application, refer to the descriptions of the content in the foregoing methods or other embodiments in which the core network element is an AMF or a GMLC. Details are not described herein again.

FIG. 14 is a diagram of composition of another core network element according to an embodiment of this application. The core network element may include a processor 310, a memory 320, and a bus 330. The processor 310 is connected to the memory 320 through the bus 330. The memory 320 is configured to store instructions. The processor 310 is configured to execute the instructions stored in the memory 320, to implement the steps performed by the AMF or the GMLC in the methods corresponding to FIG. 2 to FIG. 7.

Further, the core network element may further include an input port 340 and an output port 350. The processor 310, the memory 320, the input port 340, and the output port 350 may be connected through the bus 330.

The processor 310 is configured to execute the instructions stored in the memory 320, to control the input port 340 to receive a signal and control the output port 350 to send a signal, to complete the steps performed by the AMF or the GMLC in the foregoing methods. The input port 340 and the output port 350 may be a same physical entity or different physical entities. When the input port 340 and the output port 350 are a same physical entity, the input port 340 and the output port 350 may be collectively referred to as an input/output port. The memory 320 may be integrated into the processor 310, or may be disposed separately from the processor 310.

In an implementation, it may be considered that functions of the input port 340 and the output port 350 are implemented by using a transceiver circuit or a dedicated transceiver chip. It may be considered that the processor 310 is implemented by using a dedicated processing chip, a processing circuit, a processor, or a general-purpose chip.

In another implementation, it may be considered that the core network element provided in this embodiment of this application is implemented by using a general-purpose computer. To be specific, program code implementing functions of the processor 310, the input port 340, and the output port 350 is stored in the memory, and a general-purpose processor executes the code in the memory, to implement the functions of the processor 310, the input port 340, and the output port 350.

For concepts, explanations, detailed descriptions, and other steps that are related to the core network element and that are related to the technical solutions provided in embodiments of this application, refer to the descriptions of the content in the foregoing methods or other embodiments in which the core network element is an AMF or a GMLC. Details are not described herein again.

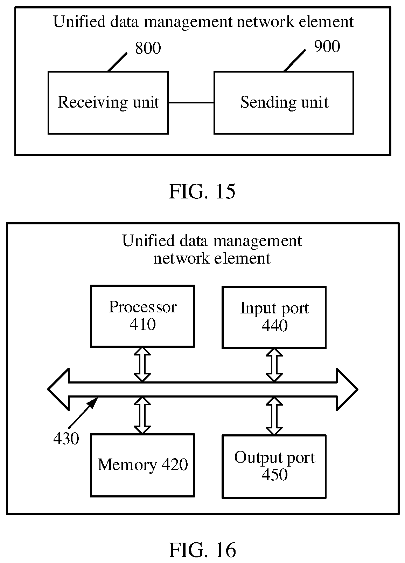

FIG. 15 is a diagram of composition of a unified data management network element according to an embodiment of this application. The unified data management network element may include:
a receiving unit 800, configured to receive a request message sent by a core network element, where the request message includes identification information of a UE and positioning privacy subscription data that is requested to be obtained, and the positioning privacy subscription data is stored on the unified data management UDM network element and indicates whether positioning is allowed when the UE is disconnected from a network or needs to be positioned via a relay UE; and
a sending unit 900, configured to send a response message to the core network element, where the response message includes the positioning privacy subscription data of the UE.

Optionally, the request message is further used to request to obtain a positioning-related privacy configuration of the UE, and the response message further includes the positioning-related privacy configuration of the UE.

Optionally, the core network element is an AMF or a gateway mobile location center GLMC.

For concepts, explanations, detailed descriptions, and other steps that are related to the unified data management network element and that are related to the technical solutions provided in embodiments of this application, refer to the descriptions of the content of the UDM in the foregoing methods or other embodiments. Details are not described herein again.

FIG. 16 is a diagram of composition of another unified data management network element according to an embodiment of this application. The unified data management network element may include a processor 410, a memory 420, and a bus 430. The processor 410 is connected to the memory 420 through the bus 430. The memory 420 is configured to store instructions. The processor 410 is configured to execute the instructions stored in the memory 420, to implement the steps performed by the UDM in the methods corresponding to FIG. 2 to FIG. 7.

Further, the UDM may further include an input port 440 and an output port 450. The processor 410, the memory 420, the input port 440, and the output port 450 may be connected through the bus 430.

The processor 410 is configured to execute the instructions stored in the memory 420, to control the input port 440 to receive a signal and control the output port 450 to send a signal, to complete the steps performed by the UDM in the foregoing methods. The input port 440 and the output port 450 may be a same physical entity or different physical entities. When the input port 440 and the output port 450 are a same physical entity, the input port 440 and the output port 450 may be collectively referred to as an input/output port. The memory 420 may be integrated into the processor 410, or may be disposed separately from the processor 410.

In an implementation, it may be considered that functions of the input port 440 and the output port 450 are implemented by using a transceiver circuit or a dedicated transceiver chip. It may be considered that the processor 410 is implemented by using a dedicated processing chip, a processing circuit, a processor, or a general-purpose chip.

In another implementation, it may be considered that the core network element provided in this embodiment of this application is implemented by using a general-purpose computer. To be specific, program code implementing functions of the processor 410, the input port 440, and the output port 450 is stored in the memory, and a general-purpose processor executes the code in the memory, to implement the functions of the processor 410, the input port 440, and the output port 450.

For concepts, explanations, detailed descriptions, and other steps that are related to the UDM and that are related to the technical solutions provided in embodiments of this application, refer to the descriptions of the content of the UDM in the foregoing methods or other embodiments. Details are not described herein again.

A person skilled in the art may understand that, for ease of description, FIG. 10, FIG. 12, FIG. 14, and FIG. 16 show only one memory and only one processor. An actual controller may include a plurality of processors and a plurality of memories. The memory may also be referred to as a storage medium, a storage device, or the like. This is not limited in embodiments of this application.

It should be understood that, in embodiments of this application, the processor may be a central processing unit (Central Processing Unit, CPU), the processor may alternatively be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like.

The memory may include a read-only memory and a random access memory, and provide instructions and data to the processor. A part of the memory may further include a nonvolatile random access memory.

In addition to a data bus, the bus may further include a power bus, a control bus, a status signal bus, and the like. However, for clear description, various types of buses in the figures are marked as the bus.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

According to the method provided in embodiments of this application, an embodiment of this application further provides a system, including the foregoing AMF, second UE, GMLC, UDM, first UE to be positioned, and the like.

Sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, various illustrative logical blocks (illustrative logical block, ILB in short) and steps that are described with reference to the embodiments disclosed in this specification may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A privacy configuration verification method, comprising:
receiving, by an access and mobility management AMF network element, a first positioning service request sent by a first network element, wherein the first positioning service request comprises identification information of a first user equipment UE and first indication information, the first UE is a target UE to be positioned, and the first indication information indicates a positioning-related privacy verification action of the first UE;
sending, by the AMF, a second positioning service request to a second UE when the AMF cannot establish a connection to the first UE;
receiving, by the AMF, a second positioning service response sent by the second UE, wherein the second positioning service response indicates a privacy configuration verification result of the first UE, and the second UE is a UE used to establish a connection to the first UE; and
sending, by the AMF, a first positioning service response to the first network element.

2. The method according to claim 1, wherein the first positioning service request is used to request an absolute location of the first UE or a relative location between the first UE and the second UE.

3. The method according to claim 1, wherein the second positioning service request is sent by the AMF to a location management function LMF network element, and processed by the LMF and sent to the second UE.

4. The method according to claim 1, wherein when the first indication information indicates that the first UE needs to be notified, the second positioning service request comprises a notification indication and/or identification information of a positioning client.

5. The method according to claim 4, wherein when the first indication information indicates that the first UE needs to be notified and user confirmation needs to be obtained, the second positioning service request further comprises indication information indicating that the user confirmation is required.

6. The method according to claim 5, wherein a trigger condition under which the second positioning service request comprises the notification indication and/or the identification information of the positioning client, and/or the indication information indicating that the user confirmation is required comprises at least one of the following:
the first indication information indicates that a privacy configuration of the first UE needs to be notified to a user and/or confirmed by the user;
the AMF determines that a connection to the first UE cannot be established; or
the AMF determines that a notification response and/or a confirmation response related to the first UE are/is not received, wherein the notification response and/or the confirmation response are/is responses/a response generated after verification is performed on the privacy configuration of the first UE.

7. The method according to claim 1, wherein when the second positioning service request comprises a notification indication and/or identification information of a positioning client, the second positioning service response comprises a notification response message corresponding to the notification indication; or
when the second positioning service request comprises the notification indication and/or the identification information of the positioning client, and indication information indicating that user confirmation is required, the second positioning service response further comprises:
a positioning privacy indication corresponding to the indication information, wherein the positioning privacy indication indicates whether the first UE allows positioning.

8. The method according to claim 1, wherein in either of the following cases:
the AMF cannot establish a connection to the first UE, and the first indication information indicates that the privacy configuration is that positioning needs to be notified to a user and confirmed by the user, and positioning is allowed when there is no response, or
the AMF cannot establish a connection to the first UE, and the first indication information indicates that the privacy configuration is that positioning needs to be notified to a user and confirmed by the user, and positioning is not allowed when there is no response,
the method further comprises:
sending, by the AMF, a positioning service reject message to the first network element, wherein the positioning service reject message is used to reject the first positioning service request of the first network element.

9. The method according to claim 8, wherein the positioning service reject message comprises a reject cause value, and the reject cause value indicates that the AMF cannot establish a connection to the first UE or cannot obtain user confirmation.

10. A privacy configuration verification method, comprising:
receiving, by a second user equipment UE, a sidelink positioning/ranging service request sent by an access and mobility management AMF network element, wherein the sidelink positioning/ranging service request comprises identification information of a first UE, the second UE is a UE connected to the AMF, and the first UE is a target UE;
sending, by the second UE, a discovery message to the first UE, and establishing a connection to the first UE;
sending, by the second UE, a privacy verification request to the first UE, wherein the privacy verification request is used to notify the first UE to perform verification on a privacy configuration;
receiving, by the second UE, a privacy verification response sent by the first UE, wherein the privacy verification response indicates a privacy configuration verification result of the first UE; and
sending, by the second UE, a sidelink positioning/ranging service response to the AMF based on the privacy verification response.

11. The method according to claim 10, wherein when the privacy configuration is that the first UE needs to be notified, the sidelink positioning/ranging service request comprises a notification indication and/or identification information of a positioning client.

12. The method according to claim 11, wherein when the privacy configuration is that the first UE needs to be notified and user confirmation is required, the sidelink positioning/ranging service request further comprises indication information indicating that the user confirmation is required.

13. The method according to claim 12, wherein a trigger condition under which the sidelink positioning/ranging service request comprises the notification indication and/or the identification information of the positioning client, and/or the indication information indicating that the user confirmation is required comprises:
the AMF determines that a notification response and/or a confirmation response related to the first UE are/is not received, wherein the notification response and/or the confirmation response are/is responses/a response generated after verification is performed on the privacy configuration of the first UE.

14. The method according to claim 10, wherein when the sidelink positioning/ranging service request comprises a notification indication and/or identification information of a positioning client, the sidelink positioning/ranging service response comprises a notification response message corresponding to the notification indication; or
when the sidelink positioning/ranging service request comprises the notification indication and/or the identification information of the positioning client, and indication information indicating that user confirmation is required, the sidelink positioning/ranging service response further comprises:
a positioning privacy indication corresponding to the indication information, wherein the positioning privacy indication indicates whether the first UE allows positioning.

15. The method according to any one of claims 10 to 14, wherein when the sidelink positioning/ranging service request comprises the notification indication and/or the identification information of the positioning client, the privacy verification request comprises the notification indication and/or the identification information of the positioning client, and the privacy verification response comprises the notification response message corresponding to the notification indication; or
when the sidelink positioning/ranging service request comprises the notification indication and/or the identification information of the positioning client, and the indication information indicating that the user confirmation is required, the privacy verification request comprises the notification indication and/or the identification information of the positioning client, and the indication information indicating that the user confirmation is required, and the privacy verification response comprises the notification response message and the positioning privacy indication corresponding to the indication information.

16. The method according to any one of claims 10 to 15, wherein the method further comprises:
sending, by the second UE, a verification result notification message to the AMF, wherein the verification result notification message comprises the positioning privacy indication.

17. The method according to claim 16, wherein the verification result notification message further comprises:
a notification complete indication indicating that the first UE has completed verification notification for the second UE.

18. A privacy configuration verification method, comprising:
sending, by a core network element, a request message to a unified data management UDM network element, wherein the request message comprises identification information of a UE and positioning privacy subscription data that is requested to be obtained, and the positioning privacy subscription data indicates whether positioning is allowed when the UE is disconnected from a network or needs to be positioned via a relay UE; and
receiving, by the core network element, a response message sent by the UDM, wherein the response message comprises the positioning privacy subscription data of the UE.

19. The method according to claim 18, wherein the method further comprises:
determining, by the core network element based on the privacy subscription data, whether to position the UE.

20. The method according to claim 18 or 19, wherein before the sending, by a core network element, a request message to a unified data management UDM network element, the method further comprises:
determining, by the core network element, that an access and mobility management AMF network element cannot establish a connection to the UE.

21. The method according to any one of claims 18 to 20, wherein the request message is further used to request to obtain a positioning-related privacy configuration of the UE, and the response message further comprises the positioning-related privacy configuration of the UE.

22. The method according to any one of claims 18 to 21, wherein the core network element is an AMF or a gateway mobile location center GLMC.

23. A privacy configuration verification method, comprising:
receiving, by a unified data management UDM network element, a request message sent by a core network element, wherein the request message comprises identification information of a UE and positioning privacy subscription data that is requested to be obtained, and the positioning privacy subscription data is stored in the UDM and indicates whether positioning is allowed when the UE is disconnected from a network or needs to be positioned via a relay UE; and
sending, by the UDM, a response message to the core network element, wherein the response message comprises the positioning privacy subscription data of the UE.

24. The method according to claim 23, wherein the request message is further used to request to obtain a positioning-related privacy configuration of the UE, and the response message further comprises the positioning-related privacy configuration of the UE.

25. The method according to claim 23 or 24, wherein the core network element is an AMF or a gateway mobile location center GLMC.

26. A privacy configuration verification method, comprising:
receiving, by an access and mobility management AMF network element, a first positioning service request sent by a first network element, wherein the first positioning service request comprises identification information of a first user equipment UE and first indication information, the first UE is a target UE to be positioned, and the first indication information indicates a positioning-related privacy verification action of the first UE; and
sending, by the AMF, a positioning service reject message to the first network element when the AMF cannot establish a connection to the first UE, and the first indication information indicates that the privacy configuration is that positioning needs to be notified to a user and confirmed by the user, wherein the positioning service reject message is used to reject the first positioning service request of the first network element.

27. The method according to claim 26, wherein the first positioning service request is used to request an absolute location of the first UE or a relative location between the first UE and the second UE.

28. The method according to claim 26 or 27, wherein the positioning service reject message comprises a reject cause value, and the reject cause value indicates that the AMF cannot establish a connection to the first UE or cannot obtain user confirmation.

29. The method according to any one of claims 26 to 28, wherein the first network element is a gateway mobile location center GLMC.

30. An apparatus, comprising:
a receiving unit, configured to receive a first positioning service request sent by a first network element, wherein the first positioning service request comprises identification information of a first user equipment UE and first indication information, the first UE is a target UE to be positioned, and the first indication information indicates a positioning-related privacy verification action of the first UE; and
a sending unit, configured to send a second positioning service request to a second UE when an access and mobility management AMF network element cannot establish a connection to the first UE, wherein
the receiving unit is further configured to receive a second positioning service response sent by the second UE, wherein the second positioning service response indicates a privacy configuration verification result of the first UE, and the second UE is a UE used to establish a connection to the first UE; and
the sending unit is further configured to send a first positioning service response to the first network element.

31. The apparatus according to claim 30, wherein the first positioning service request is used to request an absolute location of the first UE or a relative location between the first UE and the second UE.

32. The apparatus according to claim 30, wherein the second positioning service request is sent by the AMF to a location management function LMF network element, and processed by the LMF and sent to the second UE.

33. The apparatus according to claim 30, wherein when the first indication information indicates that the first UE needs to be notified, the second positioning service request comprises a notification indication and/or identification information of a positioning client.

34. The apparatus according to claim 33, wherein when the first indication information indicates that the first UE needs to be notified and user confirmation needs to be obtained, the second positioning service request further comprises indication information indicating that the user confirmation is required.

35. The apparatus according to claim 34, wherein a trigger condition under which the second positioning service request comprises the notification indication and/or the identification information of the positioning client, and/or the indication information indicating that the user confirmation is required comprises at least one of the following:
the first indication information indicates that a privacy configuration of the first UE needs to be notified to a user and/or confirmed by the user;
the AMF determines that a connection to the first UE cannot be established; or
the AMF determines that a notification response and/or a confirmation response related to the first UE are/is not received, wherein the notification response and/or the confirmation response are/is responses/a response generated after verification is performed on the privacy configuration of the first UE.

36. The apparatus according to claim 30, wherein when the second positioning service request comprises a notification indication and/or identification information of a positioning client, the second positioning service response comprises a notification response message corresponding to the notification indication; or
when the second positioning service request comprises the notification indication and/or the identification information of the positioning client, and indication information indicating that user confirmation is required, the second positioning service response further comprises:
a positioning privacy indication corresponding to the indication information, wherein the positioning privacy indication indicates whether the first UE allows positioning.

37. The apparatus according to claim 30, wherein in either of the following cases:
the AMF cannot establish a connection to the first UE, and the first indication information indicates that the privacy configuration is that positioning needs to be notified to a user and confirmed by the user, and positioning is allowed when there is no response, or
the AMF cannot establish a connection to the first UE, and the first indication information indicates that the privacy configuration is that positioning needs to be notified to a user and confirmed by the user, and positioning is not allowed when there is no response,
the sending unit is further configured to:
send a positioning service reject message to the first network element, wherein the positioning service reject message is used to reject the first positioning service request of the first network element.

38. The apparatus according to claim 37, wherein the positioning service reject message comprises a reject cause value, and the reject cause value indicates that the AMF cannot establish a connection to the first UE or cannot obtain user confirmation.

39. An apparatus, comprising:
a receiving unit, configured to receive a sidelink positioning/ranging service request sent by an access and mobility management AMF network element, wherein the sidelink positioning/ranging service request comprises identification information of a first UE, the user equipment is a UE connected to the AMF, and the first UE is a target UE; and
a sending unit, configured to: send a discovery message to the first UE, and establish a connection to the first UE; and
send a privacy verification request to the first UE, wherein the privacy verification request is used to notify the first UE to perform verification on a privacy configuration, wherein
the receiving unit is further configured to receive a privacy verification response sent by the first UE, wherein the privacy verification response indicates a privacy configuration verification result of the first UE; and
the sending unit is further configured to send a sidelink positioning/ranging service response to the AMF based on the privacy verification response.

40. The apparatus according to claim 39, wherein when the privacy configuration is that the first UE needs to be notified, the sidelink positioning/ranging service request comprises a notification indication and/or identification information of a positioning client.

41. The apparatus according to claim 40, wherein when the privacy configuration is that the first UE needs to be notified and user confirmation is required, the sidelink positioning/ranging service request further comprises indication information indicating that user confirmation is required.

42. The apparatus according to claim 41, wherein a trigger condition under which the sidelink positioning/ranging service request comprises the notification indication and/or the identification information of the positioning client, and/or the indication information indicating that the user confirmation is required comprises:
the AMF determines that a notification response and/or a confirmation response related to the first UE are/is not received, wherein the notification response and/or the confirmation response are/is responses/a response generated after verification is performed on the privacy configuration of the first UE.

43. The apparatus according to claim 39, wherein when the sidelink positioning/ranging service request comprises a notification indication and/or identification information of a positioning client, the sidelink positioning/ranging service response comprises a notification response message corresponding to the notification indication; or
when the sidelink positioning/ranging service request comprises the notification indication and/or the identification information of the positioning client, and indication information indicating that user confirmation is required, the sidelink positioning/ranging service response further comprises:
a positioning privacy indication corresponding to the indication information, wherein the positioning privacy indication indicates whether the first UE allows positioning.

44. The apparatus according to any one of claims 39 to 43, wherein when the sidelink positioning/ranging service request comprises the notification indication and/or the identification information of the positioning client, the privacy verification request comprises the notification indication and/or the identification information of the positioning client, and the privacy verification response comprises the notification response message corresponding to the notification indication; or
when the sidelink positioning/ranging service request comprises the notification indication and/or the identification information of the positioning client, and the indication information indicating that the user confirmation is required, the privacy verification request comprises the notification indication and/or the identification information of the positioning client, and the indication information indicating that the user confirmation is required, and the privacy verification response comprises the notification response message and the positioning privacy indication corresponding to the indication information.

45. The apparatus according to any one of claims 39 to 44, wherein the sending unit is further configured to send a verification result notification message to the AMF, wherein the verification result notification message comprises the positioning privacy indication.

46. The apparatus according to claim 45, wherein the verification result notification message further comprises a notification complete indication indicating that the first UE has completed verification notification for the second UE.

47. An apparatus, comprising:
a sending unit, configured to send a request message to a unified data management UDM network element, wherein the request message comprises identification information of a UE and positioning privacy subscription data that is requested to be obtained, and the positioning privacy subscription data indicates whether positioning is allowed when the UE is disconnected from a network or needs to be positioned via a relay UE; and
a receiving unit, configured to receive a response message sent by the UDM, wherein the response message comprises the positioning privacy subscription data of the UE.

48. The apparatus according to claim 47, wherein the apparatus further comprises:
a processing unit, configured to determine, based on the privacy subscription data, whether to position the UE.

49. The apparatus according to claim 47 or 48, wherein before the sending unit sends the request message to the unified data management UDM network element, the processing unit is further configured to:
determine that an access and mobility management AMF network element cannot establish a connection to the UE.

50. The apparatus according to any one of claims 47 to 49, wherein the request message is further used to request to obtain a positioning-related privacy configuration of the UE, and the response message further comprises the positioning-related privacy configuration of the UE.

51. The apparatus according to any one of claims 47 to 50, wherein the apparatus is an AMF or a gateway mobile location center GLMC.

52. An apparatus, comprising:
a receiving unit, configured to receive a request message sent by a core network element, wherein the request message comprises identification information of a UE and positioning privacy subscription data that is requested to be obtained, and the positioning privacy subscription data is stored on the unified data management UDM network element and indicates whether positioning is allowed when the UE is disconnected from a network or needs to be positioned via a relay UE; and
a sending unit, configured to send a response message to the core network element, wherein the response message comprises the positioning privacy subscription data of the UE.

53. The apparatus according to claim 52, wherein the request message is further used to request to obtain a positioning-related privacy configuration of the UE, and the response message further comprises the positioning-related privacy configuration of the UE.

54. The apparatus according to claim 52 or 53, wherein the core network element is an AMF or a gateway mobile location center GLMC.

55. An apparatus, comprising:
a receiving unit, configured to receive a first positioning service request sent by a first network element, wherein the first positioning service request comprises identification information of a first user equipment UE and first indication information, the first UE is a target UE to be positioned, and the first indication information indicates a positioning-related privacy verification action of the first UE; and
a sending unit, configured to send a positioning service reject message to the first network element when an access and mobility management AMF network element cannot establish a connection to the first UE, and the first indication information indicates that the privacy configuration is that positioning needs to be notified to a user and confirmed by the user, wherein the positioning service reject message is used to reject the first positioning service request of the first network element.

56. The apparatus according to claim 55, wherein the first positioning service request is used to request an absolute location of the first UE or a relative location between the first UE and the second UE.

57. The apparatus according to claim 55 or 56, wherein the positioning service reject message comprises a reject cause value, and the reject cause value indicates that the AMF cannot establish a connection to the first UE or cannot obtain user confirmation.

58. The apparatus according to any one of claims 55 to 57, wherein the first network element is a gateway mobile location center GLMC.

59. An apparatus, comprising:
a processor, a memory, and a bus, wherein the processor and the memory are connected through the bus, the memory is configured to store a set of program code, and the processor is configured to invoke the program code stored in the memory to perform the method according to any one of claims 1 to 9, 10 to 17, 18 to 22, 23 to 25, or 26 to 29.

60. A computer-readable storage medium, wherein
the computer-readable storage medium stores instructions, and when the instructions are run on a computer, the method according to any one of claims 1 to 9, 10 to 17, 18 to 22, 23 to 25, or 26 to 29 is implemented.

61. A chip, comprising one or more processing circuits, wherein the one or more processing circuits are configured to implement the method according to any one of claims 1 to 9, 10 to 17, 18 to 22, 23 to 25, or 26 to 29.
